(19) Europäisches Patentamt
European Patent Office
Office européen des brevets

(11) Veröffentlichungsnummer: **0 120 352**
**B1**

(12) # EUROPÄISCHE PATENTSCHRIFT

(45) Veröffentlichungstag der Patentschrift: **13.06.90**

(21) Anmeldenummer: **84102336.9**

(22) Anmeldetag: **05.03.84**

(51) Int. Cl.$^5$: **C 07 C 229/36,**
C 07 C 321/22, C 07 C 317/44,
C 07 C 327/00, A 01 N 37/46,
A 01 N 41/10, A 01 N 43/10

(54) **N-Acyl-anthranilsäurederivate, Verfahren zu ihrer Herstellung und ihre Verwendung zur Bekämpfung unerwünschten Pflanzenwuchses.**

(30) Priorität: **09.03.83 DE 3308239**

(43) Veröffentlichungstag der Anmeldung:
**03.10.84 Patentblatt 84/40**

(45) Bekanntmachung des Hinweises auf die Patenterteilung:
**13.06.90 Patentblatt 90/24**

(84) Benannte Vertragsstaaten:
**BE CH DE FR GB IT LI NL**

(56) Entgegenhaltungen:
**EP-A-0 024 669**
**EP-A-0 032 242**
**EP-A-0 049 398**
**FR-A-2 360 559**
**FR-A-2 377 768**

(73) Patentinhaber: **BASF Aktiengesellschaft**
**Carl-Bosch-Strasse 38**
**D-6700 Ludwigshafen (DE)**

(72) Erfinder: **Hamprecht, Gerhard, Dr.**
**Rote-Turm-Strasse 28**
**D-6940 Weinheim (DE)**
Erfinder: **Rohr, Wolfgang, Dr.**
**In der Dreispitz 13**
**D-6706 Wachenheim (DE)**
Erfinder: **Varwig, Juergen, Dr.**
**Bitterstrasse 21**
**D-6900 Heidelberg (DE)**
Erfinder: **Wuerzer, Bruno, Dr., Dipl.-Landw.**
**Ruedigerstrasse 13**
**D-6701 Otterstadt (DE)**

**EP 0 120 352 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft N-Acylanthranilsäurederivate, ein Verfahren zu ihrer Herstellung, Herbizide, die N-Acyl-anthranilsäurederivate als Wirkstoffe enthalten, sowie ein Verfahren zur Bekämpfung unerwünschten Pflanzenwuchses mit diesen Verbindungen.

Substituierte N-Acyl-anhranilsäurederivate sind als Zwischenprodukte für die Synthese pharmakologisch und herbizid wirksamer Verbindungen (FR—PS—2 121 341, DE—OS—29 14 915, DE—OS—30 00 309, DE—OS—30 37970), als herbizide Wirkstoffe (BE—PS—648 259) ode als fungizide Wirkstoffe (DE—OS—27 59 121) bekannt.

Es wurde gefunden, daß N-Acyl-anthranilsäurederivate der Formel I

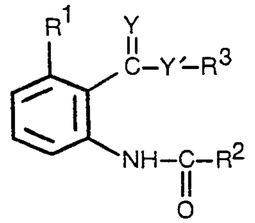

(I),

in der

$R^1$ Halogen, Nitro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto,

$R^2$ einen gegebenenfalls durch $C_1$—$C_4$-Alkyl substituierten Thienylrest oder einen durch $C_1$—$C_4$-Halogenalkyl, $C_1$—$C_4$-Halogenalkoxy, $C_1$—$C_4$-Halogenalkylmercapto, $C_1$—$C_4$-Halogenalkylsulfinyl, $C_1$—$C_4$-Halogenalkylsulfonyl oder $C_1$—$C_4$-Alkylsulfonyl m- oder p- oder m- und p-substituierten Phenylrest,

$R^3$ einen gegebenenfalls durch Halogen, Cyano, Thiocyano, Nitro, $C_2$—$C_4$-Alkylcarbonyl, $C_1$—$C_4$-Alkoxy, $C_2$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alkinylmercapto, $C_2$—$C_5$-Alkoxycarbonyl, $C_2$—$C_5$-Alkylmercaptocarbonyl oder $C_3$—$C_4$-Alkenylcarbonyl substituierten, unverzweigten oder verzweigten Alkyl, Alkenyl, oder Alkinylrest mit bis zu 12 Kohlenstoffatomen einen gegebenenfalls durch $C_1$—$C_4$-Alkyl, $C_1$—$C_4$-Alkoxy, $C_1$—$C_4$-Alkylmercapto, $C_1$—$C_4$-Alkylsulfonyl, Halogen, Trifluormethyl, Nitro oder Cyano substituierten $C_3$—$C_7$-Cycloalkylrest, einen 2-(2-Alkoxy-ethoxy)-ethyl-, 2-(2-Alkenoxy-ethoxy)-ethyl- oder einen 2-(2-Alkinoxy-ethoxy)-ethylrest mit jeweils bis zu 8 Kohlenstoffatomen oder einen 3-(2-Alkoxy-ethoxy)-n-propylrest mit bis zu 9 Kohlennstoffatomen, einen gegebenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest, einen gegebenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxyalkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten,

mit der Maßgabe, daß wenn $R^1$ Fluor bedeutet, $R^2$ auch für einen gegebenenfalls durch Halogen substituierten Phenylrest und $R^3$ auch für einen gegebenenfalls durch $C_1$—$C_4$-Alkyl-, $C_1$—$C_4$-Hydroxyalkyl-, $C_2$—$C_4$-Halogenalkyl- oder $C_2$—$C_5$-Alkoxyalkyl substituierten Ammoniumrest stehen konnen, neben vorzüglicher Kulturpflanzenvertraglichkeit eine stärkere herbizide Wirkung zeigen als bisher verwendet herbizide N-Acyl-anthranilsaürederivate.

In der Formel I bedeutet $R^1$ beispielsweise Halogen, Nitro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto, Fluor, Chlor, Brom, Jod, Nitro, Methyl, Ethyl, Isopropyl, n-Propyl, Isobutyl, tert.-Butyl, Trichlormethyl, Difluorchlormethyl, Trifluormethyl, Difluormethyl, 2,2,1,1-Tetrafluorethyl, Methoxy, Ethoxy, Isopropoxy, n-Butoxy, Trifluormethoxy, Hexafluorisopropoxy, Difluormethylmercapto, Trifluormethylmercapto oder Reste der Formel $Y''$—$CF_2C[Z]_3$, wobei Y'' Sauerstoff oder Schwefel und jedes Z und Z unabhangig voneinander Wasserstoff, Fluor, Chlor, Brom oder Jod bedeuten, wie 2,2,1,1-Tetrafluorethoxy, 1,1-Difluorethoxy, 2,2,1,1-Tetrafluoroethylmercapto, 1,1-Difluorethylmercapto.

$R^2$ in Formel 1 bedeutet beispielsweise gegenbenfalls durch $C_1$—$C_4$-Alkyl, vorzugsweise Methyl, substituiertes Thien-2-yl, Thien-3-yl oder einen Arylrest, beispielsweise einen Phenyl- oder Naphthylrest, insbesondere Phenylrest, der folgende Substituenten in m-, p- oder m- und p-Stellung tragen kann: $C_1$—$C_4$-Halogenalkyl, $C_1$—$C_4$-Halogenalkoxy, $C_1$—$C_4$-Halogenalkylmercapto, $C_1$—$C_4$-Halogenalkylsulfinyl, $C_1$—$C_4$-Halogenalkylsulfonyl, Halogen oder $C_1$—$C_4$-Alkylsulfonyl, wie Methylmercapto, Ethylmercapto, Isopropylmercapto, chlormethoxy, Fluormethoxy, Dufluormethoxy, Difluorchlormethoxy, Trifluormethoxy, Trichlormethoxy, 1,1,2,2-Tetrafluorethoxy, 1,1,2-Trifluor-2-chlorethoxy, 1,1,1,-Trifluor-2-bromethoxy, 1,1,2,3,3,3-Hexafluor-n-propyloxy, Pentafluorethoxy, Hexafluorisopropoxy, Difluormethylmercapto,

Trifluormethylmercapto, Pentafluorethylmercapto, 1,1,2,2-Tetrafluorethylmercapto, Trichlormethylmercapto, Dichlorfluormethylmercapto, Trifluormethylmercapto, Methylsulfonyl, Ethylsulfonyl, Isopropylsulfonyl, Trifluormethylsulfonyl, Pentafluorethylsulfonyl, Trifluormethylsulfinyl, Fluor, Chlor, Brom, Jod, Trifluormethyl, Difluorchlormethyl, Difluormethyl, 1,1,2,2-Tetrafluorethyl oder Pentafluorethyl.

$R^2$ in Formel I bedeutet beispielsweise einen gegebenfalls durch Halogen, Cyano, Thiocyano, Nitro, $C_2$—$C_4$-Alkylcarbonyl, $C_1$—$C_4$-Alkoxy, $C_2$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alkinylmercapto, $C_2$—$C_5$-Alkoxycarbonyl, $C_2$—$C_5$-Alkylmercaptocarbonyl oder $C_3$—$C_4$-Alkenylcarbonyl substituierten, unverzweigten oder verzweigten Alkyl-, Alkenyl- oder Alkinylrest mit bis zu 12 Kohlenstoffatomem vorzugsweise mit bis zu 4 Kohlenstoffatomen, wie Methyl, Ethyl, n-Propyl, Isopropyl, n-Butyl, Isobutyl, sec.-Butyl, tert.-Butyl, n-Pentyl, tert-Amyl, n-Hexyl, Pentyl-3, 1,2-Dimethyl-n-propyl, 1,3-Dimethyl-n-butyl, 1-Ethyl-2-methyl-n-propyl, 1,2,2-Trimethyl-n-propyl, 1,2-Dimethyl-n-hex-4-yl, Heptyl, Octyl, Nonyl, Decyl, Undecyl, Dodecyl, Allyl, Methallyl, Crotyl, 2-Ethyl-hex-2-enyl, Hex-5-enyl, 2-Methyl-but-2-enyl, 2-Methyl-but-3-enyl, But-1-en-3-yl, 2-Methyl-but-1-en-4-yl, 2-Methyl-but-2-en-4-yl, 3-Methyl-but-1-en-3-yl, Propargyl, But-1-in-3-yl, But-2-inyl, 2-Chlorethyl, 2-Chlor-n-propyl, 3-Chlor-n-propyl, 2-chlor-sec.-butyl, 2-Chlor-isobutyl, 2-Fluoro-sec.-butyl, 2-Fluor-isobutyl, 2-Fluor-isopropyl, Chlor-tert.-butyl, 2,2,2-Trifluorethyl, 2-Cyanoethyl, 2-Cyano-n-propyl, 3-Cyano-n-propyl, 4-Cyano-n-butyl, 3-Cyano-prop-2-enyl, 4-Cyano-but-2-inyl, 2-Nitroethyl, 2-Nitro-n-propyl, 3-Nitro-n-propyl, 3-Nitro-prop-2-enyl, Propan-2-onyl, Butan-2-onyl, But-3-en-2-onyl, Methoxyethyl, Ethoxyethyl, 3-Methoxypropyl, Methoxyisopropyl, 3-Methoxybutyl, 1-Methoxybut-2-yl, Ethoxy-tert.-butyl, Methoxy-tert.-butyl, 2-Methoxy-n-butyl, 4-Methoxy-n-butyl, 2-allyloxyethyl, 2-Propargyloxyethyl, 2-Allyloxy-n-propyl, 2-Propargyloxy-n-propyl, 3-Allyloxy-n-propyl, 4-Allyloxy-but-2-inyl, 2-Methylmercaptoethyl, 2-Ethylmercaptoethyl, 3-Methylmercapto-n-propyl, 2-Allylmercaptoethyl, 2-Propargylmercaptoethyl, 2-Allylmercapto-n-propyl, Vinylcarbonylethyl, 2-Thiocyano-ethyl, 2-Thiocyano-n-propyl, 3-Thiocyano-n-propyl, 4-Thiocyano-n-butyl, 3-Methoxycarbonyl-prop-2-yl, 3-Ethoxycarbonyl-prop-2-yl, 3-Methylmercaptocarbonyl-prop-2-yl, 3-Ethylmercapto-carbonyl-prop-2-yl, 3-Methoxycarbony-prop-2-enyl, 3-Ethoxycarbonyl-prop-2-enyl, 3-Ethoxycarbonyl-prop-2-inyl, 3-n-Butoxycarbonyl-prop-2-inyl, einen gegenbenfalls durch $C_1$—$C_4$-Alkyl, $C_1$—$C_4$-Alkoxy, $C_1$—$C_4$-Alkylmercapto, $C_2$—$C_4$-Alkylsulfonyl, Halogen, Trifluormethyl, Nitro oder Cyano substituierten $C_3$—$C_7$-Cycloalkylrest, wie Cyclopropyl, Cyclobutyl, Cyclopentyl, Cyclohexyl, Cycloheptyl, 2-, 3-Methylcyclopentyl, 2-, 3-, 4-Methylcyclohexyl, 2-, 3-, 4-Methoxyhexyl, 2-, 3-, 4-Methylmercaptocyclohexyl, 2-, 3-, 4-Methylsulfonylhexyl, 2-, 3-, 4-Chlorcyclohexyl, 2-, 3-, 4-Trifluormethylcyclohexyl, 2-, 3-, 4-Nitgrocyclohexyl, 2-, 3-, 4-Cyanocyclohexyl,

einen 2-(2-Alkoxy-ethoxy)-ethyl-, 2-(2-Alkenoxy-ethoxy)-ethyl- oder 2(2-Alkinoxy-ethoxy)-ethylrest mit jeweils bis zu 8 Kohlenstoffatomen, wie 2-(2-Methoxy-ethoxy)-ethyl, 2-(2-Allyloxy-ethoxy)-ethyl, 2-(2-Propargyloxy-ethoxy)-ethyl oder oder einen 3-(2-Alkoxy-ethoxy)-n-propylrest mit bis zu 9 Kohlenstoffatomen, wie 3-(2-Methoxy-ethoxy)-n-propyl,

einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest oder einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder cyano substituierten Phenoxyalkylrest mit 7 bis 12 Kohlenstoffatomen, Phenoxyalkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen, wie Phenyl, 2-, 3-, 4-Chlorphenyl, 2,3-, 2,4- 2,5-, 2,6-, 3,5- oder 3,6-Dichlorphenyl, 2,4,5- oder 2,4,6-Trichlorphenyl, 2-, 3-, 4-Kresyl, 2,3-, 2,4-, 2,5-, 2,6-, 3,5- oder 3,6-Dimethylphenyl, 2-chlor-4-trifluormethyl-phenyl, 2-, 3-, 4-Trifluormethylphenyl, 2-, 3-, 4-Nitrophenyl, 2,4-Dinitro-phenyl, 2-Chlor-4-nitrophenyl, 2-Nitro-4-chlorphenol, 2-, 3-, 4-Cyanophenyl, 2-Chlor-4-cyanophenyl, 2-Cyano-4-nitrophenyl, 2-, 3-, 4-Methoxyphenyl, 2-, 3-, 4-Chlordifluormethoxy-phenyl, 2-, 3-, 4-Methylmercaptophenyl, 2-, 3-, 4-Trifluormethylmercapto-phenyl, 2-(2'-, 3', 4'-Chlorphenyl)-ethyl, 2-(2',4'-Dichlorphenyl)-ethyl, 2-(2',4',6'-Trichlorphenyl)-ethyl, 2-(3',5'-Dichlorphenyl)-ethyl, 2-(o-, m-, p-Tolyl)-ethyl, 2-(3',4'-Xylyl)-ethyl, 2-(2'-, 3'-, 4'-Trifluormethylphenyl)-ethyl, 2-(o-, m-, p-Anisyl)-ethyl, 2-(o-, m-, p-Difluormethyoxyphenyl)-ethyl, 2-(o-, m-, p-Chlordifluormethoxyphenyl)-ethyl, 2-(o-, m-, p-Methylmercaptophenyl)-ethyl, 2-(o-, m-, p-Trifluormethylmercaptophenyl)-ethyl, 2-(o-,m-, p-Cyanophenyl)-ethyl, 2-(o-, m-, p-Thiocyanatophenyl)-ethyl, 3-(o-, m-, p-Chlorphenyl)-n-propyl, 3-(o-, m-, p-Trifluormethylphenyl)-n-propyl, 2-Phenyl-ethyl, 3-Phenyl-n-propyl, 4-Phenyl-n-butyl, 5-Phenyl-n-pentyl, 2-(o-, m-, p-Nitrophenyl)-ethyl, 2-(3'-Chlor-4'-methoxy-phenyl)-ethyl, 2-(4'-Chlor-3'-methoxyphenyl)-ethyl, 2-(2'-Chlor-4'-trifluormethylphenyl)-ethyl, 2-Phenoxy-ethyl, 3-Phenoxy-n-propyl, 4-Phenoxy-n-butyl, 2-(o-, m-, p-Chlorphenoxy)-ethyl, 2-(2,'4,'-Dichlorphenoxy)-ethyl, 2-(o-, m-, p-Kresoxy)-ethyl, 2-(o-, m-, p-Trifluormethylphenoxy)-ethyl, 2-(2'-Chlor-4'-trifluormethylphenoxy)-ethyl, 3-(o-, m-, p-Chlorphenoxy)-n-propyl, 4-Phenoxy-but-2-in-yl, 4-(p-Chlorphenoxy)-butin-2-yl, 4-Phenoxy-but-2-en-yl, 3-(2',4'-Dichlorphenoxy)-n-propyl, 3-(3'-Trifluormethylphenoxy)-n-propyl, 4-(p-Chlorphenoxy)-but-2-en-yl.

Für den Fall, daß $R^1$ Fluor ist, kann $R^2$ auch einen gegebenfalls halogensubstituierten Phenylrest bedeuten. Beispiele für entsprechende Rest sind Phenyl, 3-Fluorphenyl, 4-Fluorphenyl, 3-Chlorphenyl, 4-Chlorphenyl, 3-Bromphenyl, 4-Jodphenyl.

Weiterhin kann $R^3$ auch einen gegebenfalls durch $C_1$—$C_4$-Alkyl, $C_1$—$C_4$-Hydroxyalkyl, $C_1$—$C_4$-Halogenalkyl oder $C_2$—$C_5$-Alkoxyalkyl sustituierten Ammoniumrest, wie Methylammonium,

Dimethylammonium, Dimethyl-(2-hydroxyethyl)-ammonium, Triethylammonium, Dimethyl-(2-methoxyethyl)-ammonium, Dimethyl-(2-chlorethyl)-ammonium, Isopropylammonium, Diethanolammonium, Triethanolammonium, Diethyl-(2-hydroxyethyl)-ammonium, Dimethylisopropanolammonium, bedeuten, wenn $R^1$ Fluor ist.

N-Acylanthranilsäurederivate der Formel Ia

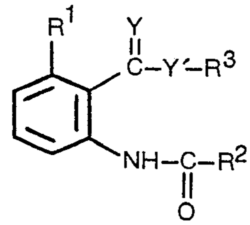

(Ia),

in der

$R^1$ Halogen, Nitro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto,

$R^2$ einen gegebenenfalls durch $C_1$—$C_4$-Alkyl substituierten Thienylrest oder einen durch $C_1$—$C_4$-Halogenalkyl, $C_1$—$C_4$-Halogenalkoxy, $C_1$—$C_4$-Halogenalkylmercapto, $C_1$—$C_4$-Halogenalkylksulfinyl, $C_1$—$C_4$-Halogenalkylsulfonyl oder $C_1$—$C_4$-Alkylsulfonyl m- oder p- oder m- und p-substituierten Phenylrest, $R^3$ einen gegebenenfalls durch Halogen, Cyano, Thiocyano, Nitro, $C_2$—$C_4$-Alkylcarbonyl, $C_1$—$C_4$-Alkoxy, $C_1$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alkinylmercapto, $C_2$—$C_5$-Alkoxycarbonyl, $C_2$—$C_5$-Alkylmercaptocarbonyl oder $C_3$—$C_4$-Alkenylcarbonyl substituierten, unverzweigten oder verzweigten Alkyl-, Alkenyl- oder alkinylrest mit bis zu 12 Kohlenstoffatomen, einen gegebenfalls durch $C_1$—$C_4$-Alkyl, $C_1$—$C_4$-Alkoxy, $C_1$—$C_4$-Alkylmercapto, $C_1$—$C_4$-Alkylsulfonyl, Halogen, Trifluormethyl, Nitro oder Cyano substituierten $C_3$—$C_7$-Cycloalkylrest, einen 2-(2-Alkoxy-ethoxy)-ethyl-, 2-(2-Alkenoxy-ethoxy)-ethyl- oder 2-(2-Alinoxy-ethoxy)-ethylrest mit bis zu 8 Kohlenstoffatomen, einen 3-(2-Alkoxy-ethoxy)-n-propylrest mit bis zu 9 Kohlenstoffatomen, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxy-alkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten,

wobei wenn $R^1$ Fluor bedeutet, $R^2$ auch für einen gegebenenfalls durch Halogen substituierten Phenylrest, und $R^3$ auch für ein Alkalimetall- oder Erdalkalimetallatom oder einen gegebenenfalls durch $C_1$—$C_4$-Alkyl-, $C_1$—$C_4$-Hydroxyalkyl, $C_1$—$C_4$-Halogenalkyl oder $C_2$—$C_5$-Alkoxyalkyl substituierten Ammoniumrest stehen können, sind als Herbizide neu.

Weiterhin sind herbizide Mittel neu, die inerte Zusatzstoffe und ein N-Acylanthranilsäurederivat der Formel Ib enthalten

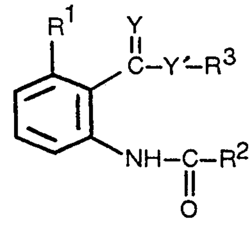

(Ib),

in der

$R^1$ Halogen, Nitro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto,

$R^2$ einen gegenbenfalls durch $C_1$—$C_4$-Alkyl substituierten Thienylrest oder einen durch $C_1$—$C_4$-Halogenalkyl, $C_1$—$C_4$-Halogenalkoxy, $C_1$—$C_4$-Halogenalkylmercapto, $C_1$—$C_4$-Halogenalkylsulfinyl, $C_1$—$C_4$-Halogenalkylsulfonyl oder $C_1$—$C_4$-Alkylsulfonyl m- oder p- oder m- und p-substituierten Phenylrest,

$R^3$ einen gegebenenfalls durch Halogen, Cyano, Thiocyano, Nitro, $C_2$—$C_4$-Alkylcarbonyl, $C_1$—$C_4$-Alkoxy, $C_2$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alinylmercapto, $C_2$—$C_5$-Alkoxycarbonyl, $C_2$—$C_5$-Alkylmercaptocarbonyl oder $C_3$—$C_4$-Alkenylcarbonyl

substituierten, unverzweigten oder verzweigten Alkyl, Alkenyl- oder Alinylrest mit bis zu 12 Kohlenstoffatomen, einen gegebenfalls durch $C_1$—$C_4$-Alkyl, $C_1$—$C_4$-Alkoxy, $C_1$—$C_4$-Alkylmercapto, $C_1$—$C_4$-Alkylsulfonyl, Halogen, Trifluormethyl, Nitro oder Cyano substituierten $C_3$—$C_7$-Cycloalkylrest, einen 2-(2-Alkoxy-ethoxy)-ethyl, 2-(2-Alkenoxy-ethoxy)-ethyl- oder 2-(2-Alkinoxy-ethoxy)-ethylrest mit bis zu 8 Kohlenstoffatomen, einen 3-(2-Alkoxy-ethoxy)-n-propylrest mit bis zu 9 Kohlenstoffatomen, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxyalkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten,

mit der Maßgabe, daß wenn $R^1$ Fluor bedeutet, $R^2$ auch für einen gegebenenfalls durch Halogen substituierten Phenylrest, und $R^3$ auch für Wasserstoff, ein Alkalimetall- oder Erdalkalimetallatom oder einen gegebenenfalls durch $C_1$—$C_4$-Alkyl-, $C_1$—$C_4$-Hydroxyalkyl, $C_1$—$C_4$-Halogenalkyl oder $C_2$—$C_5$-Alkoxyalkyl substituierten Ammoniumrest stenen können.

Bevorzugte Verbindungen der Formel Ia bzw. Ib sind solche, bei denen $R^1$ für Halogen, $R^2$ für einen Thienyl-, einen durch $C_1$—$C_4$-Halogenalkyl, $C_1$—$C_4$-Halogenalkoxy, $C_1$—$C_4$-Halogenalkylmercapto substituierten Phenylrest oder einen gegebenenfalls halogen-substituierten Phenylrest, falls $R^1$ Fluor ist, $R^3$ für einen unvezweigten oder verzweigten, gegebenenfalls durch Halogen, Cyano, $C_2$—$C_4$-Alkylcarbonyl, $C_1$—$C_4$-Alkoxy, $C_2$—$C_4$-Alkenyloxy, $C_2$—$C_4$-Alkinyloxy oder $C_1$—$C_4$-Alkylmercapto substituierten Alkyl-, Alkenyl oder Alkinylrest mit bis zu 6 Kohlenstoffatomen, einen $C_3$—$C_7$-Cycloalkylrest, einen durch $C_2$—$C_5$-Alkoxycarbonyl oder $C_2$—$C_5$-Alkylmercaptocarbonyl substituierten Alkylrest mit bis zu 3 Kohlenstoffatomen, einen 2-(2-Alkoxy-ethoxy)-ethyl-, 2-(2-Alkenoxy-ethoxy)-ethyloder 2-(2-Alkinoxy-ethoxy)-ethylrest mit bis zu 8 Kohlenstoffatomen, einen gegebenenfalls durch Alkyl, Halogenalkyl, Alkoxy, Halogenalkoxy mit jeweils bis zu 2 Kohlenstoffatomen, Halogen, Nitro oder cyano substituierten Phenylrest, oder einen gegebenenfalls durch Alkyl, Halogenalkyl, Alkoxy, Halogenalkoxy mit jeweils bis zu 2 Kohlenstoffatomen, Halogen, Nitro oder Cyano substituierten Phenoxyalkylrest mit 7 bis 10 Kohlenstoffatomen, Phenoxyalkenylrest mit 8 bis 10 Kohlenstoffatomen, Phenoxyalkinylrest mit 8 bis 10 Kohlenstoffatomen oder Phenylalkylrest mit 7 bis 10 Kohlenstoffatomen oder für den Fall, daß $R^1$ Fluor ist, auch für Wasserstoff ein Alkalimetall- oder Erdalkalimetallatom einen gegebenenfalls durch $C_1$—$C_4$-Alkyl- oder $C_1$—$C_4$-Hydroxyalkyl substituierten Ammoniumres t und Y und Y' für Sauerstoff stehen.

Die N-Acylanthranilsäurederivate der Formel

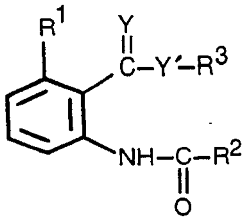

(I),

in der

$R^1$ Halogen, Nitro, $C_1$—$C_4$-Alkyl, $C_1$—$C_4$-Alkoxy, $C_1$—$C_4$-Halogenalkyl,. $C_1$—$C_4$-Halogenalkoxy oder $C_1$—$C_4$-Halgenalkylmercapto,

$R^2$ einen durch $C_1$—$C_4$-Halogenalkyl, $C_1$—$C_4$-Halogenalkoxy, $C_1$—$C_4$-Halgenalkylmercapto, $C_1$—$C_4$-Halogenalkylsulfinyl, $C_1$—$C_4$-Halogenalkylsulfonyl oder $C_1$—$C_4$-Alkylsulfonyl m- oder p- oder m- und p-substituierten Phenylrest,

$R^3$ einen gegebenenfalls durch Halogen, Cyano, Thiocyano, Nitro, $C_2$—$C_4$-Alkylcarbonyl, $C_1$—$C_4$-Alkoxy, $C_2$—$C_4$-Alkenyloxy, $C_2$—$C_4$-Alinyloxy, $C_1$—$C_4$-Alkylmercapto, $C_2$—$C_4$-Alkenylmercapto oder $C_2$—$C_4$-Alkinylmercapto, $C_2$—$C_5$-Alkoxycarbonyl, $C_2$—$C_5$-Alkylmercaptocarbonyl oder $C_3$—$C_4$-Alkenylcarbonyl substituierten, unverzeigten oder verzweigten Alkyl-, Alkenyl- oder Alkinylrest mit bis zu 12 Kohlenstoffatomen, einen 2-(2-Alkoxy-ethoxy)-ethyl-, 2-(2-Alkenoxy-ethoxy)-ethyl- oder 2-(2-Alkinoxy-ethoxy)-ethylrest mit bis zu 8 Kohlenstoffatomen oder einen 3-(2-Alkoxy-ethoxy)-n-propylrest mit bis zu 9 Kohlenstoffatomen, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest, erinen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxyalkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten, mit der Maßgabe, daß wenn $R^1$ fluor bedeutet, $R^2$ auch für einen gegebenenfalls durch Halogen. substituierten Phenylrest und $R^3$ auch für einen gegebenenfalls durch $C_1$—$C_4$-Alkyl, $C_1$—$C_4$-Hydroxylalkyl-, $C_1$—$C_4$-Halogenalkyl- oder $C_2$—$C_5$-Alkoxyalkyl substituierten Ammoniumrest stehen können, sind neu.

Man erhält die N-Acyl-anthranilsäurederivate der Formel I durch Umsetzung von Verbindungen der Formel

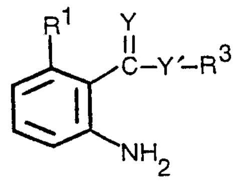

(II),

in der

$R^1$, Y, Y' und $R^3$ die obengenannten Bedeutungen haben, wobei $R^3$ jedoch für den Fall, daß $R^1$ fluor bedeutet, nicht für Wasserstoff, ein Alkalimetall- oder Erdalkalimetallatom steht, mit Verbindungen der Formel

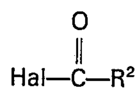

(III),

in der

$R^2$ die obengenannten Bedeutungen hat und Hal für Halogen steht, gegebenenfalls in Gegenwart eines inerten organischen Lösungsmittel oder in Wasser und gegebenenfalls in Anwesenheit eines Säureakzeptors bei einer Temperatur im Bereich zwischen 0 und 80°C (Verfahren A). Die umsetzung kann drucklos oder unter Druck, kontinuierlich oder diskontinuierlich durchgeführt werden.

Verwendet man 6-Chlorannthranilsäuremethylester und 3-Trifluormethylmercapto-benzoylfluorid als Ausgangsmaterialien, so kann der reaktionsablauf durch folgendes Formelschema wiedergegeben werden:

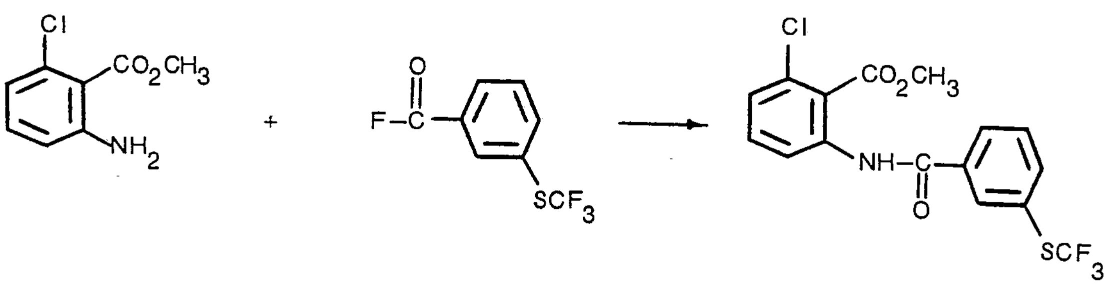

Man erhält die N-Acylanthranilsäurederivate der Formel I auch durch Umsetzung von Verbindungen der Formel I auch durch Umsetzung von Verbindungen der Formel

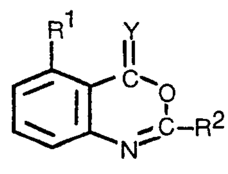

(IV),

in der

$R^1$, Y und $R^2$ die obengenannten Bedeutungen haben, mit Verbindungen der Formel

$$R^3—Y'—H \quad (V),$$

in der

$R^3$ und Y' die obengenannten Bedeutungenn haben, gegebenenfalls in Gegenwart eines inerten organischen Lösungsmittel oder direkt in einem Überschuß an Verbindung der Formel V gegenbennenfalls in Gegenwart einer anorganischen oder einer tertiären organischen Base als Katalysator bei einer Temperatur bim Bereich zwischen 0 und 190°C (Verfahren B). Die Umsetzung kann drucklos oder unter

Druck, kontinuierlich oder diskontinuierlich durch geführtwerden.

Verwendet man 5-Chlor-2-m-trifluormethylmecaptophenyl-4H-3,1-benzoxazin-4-on und n-Propylalkohol als Ausgangsmaterialien, so kann der Reaktionsablauf durch folgendes Formelschema wiedergegeben werden:

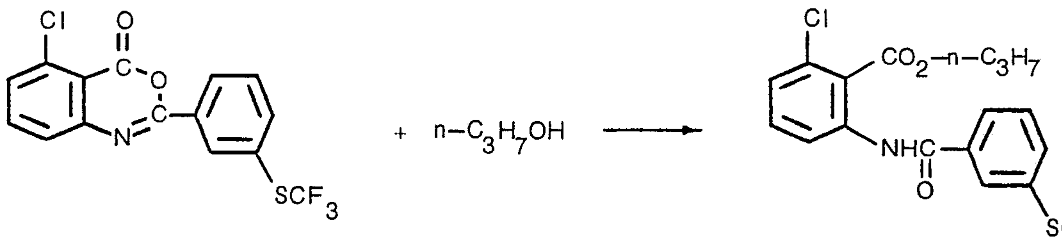

Zweckmäßgerweise verwendet man für Umsetzung A als auch für Umsetzung B unter den jeweiligen Reaktionsbedingungen inerte Lösungs- oder Verdünnungsmittel. Geeignet sind z.B. Halogenkohlenwasserstoffe, insbesondere Chlorkohlenwasserstoffe, z. B. Tetrachlorethylen, 1,1,2,2- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1-oder 1,1,2-Trichlorethan, Trichlorethylen, Pentachlorethan, o-, m-, p-Difluorbenzol, 1,1- oder 1,2-Dichlorethan, 1,2-cis-Dichlorethylen, Chlorbenzol, Fluorbenzol, Brombenzol, Jodbenzol, o-, m-, p-Dichlorbenzol, o-, p-, m-Dibrombenzol, o-, m-, p-Chlortoluol, 1,2,4-Trichlorbenzol; Ether, z. B. Ethylpropylether, Methyl-tert.-butylether, n-Butylethylether, Di-n-butylether, Diisobutylether, Diiosoamylether, Diisopropylether, Anisol, Phenetol, Cyclohexylmethylether, Diethylether, Ethylenglykoldimethylether, Tetrahydrofuran, Dioxan, Thionaixol, β,β'-Dichlordiethylether; Nitrokohlenwasserstoffe wie Nitromethan, Nitroethan, Nitrobenzol, o-, m-, p-Chlornitrobenzol, o-Nitrotoluol; Nitrile wie Acetonitril, Butyronitril, Isobutyronitril, Benzonitril, m-Chlorbenzonitril; aliphatische oder cycloaliphatische Kohlenwasserstoffe, z. B. Heptan, Pinan, Nonan, o-, m-, p-Cymol, Benzinfraktionen innerhalb eines Siedepunktintervalles von 70 bis 190°C, Cyclohexan, Methylcyclkohexan, Dekalin, Petrolether, Hexan, Ligroin, 2,2,4-Trimethylpentan, 2,2,3-Trimethylpentan, 2,3,3-Trimethylpentan, Octan; Ester, z. B. Ethylacetat, Acetessigester, isobutylacetat; Amide, z. B. Formamid, Methylformamid, Dimethylformamid; Ketone, z. B. Aceton, Methylethylketon, gegebenenfalls auch Wasser und entsprechende Gemische. Zweckmäßigerweise verwendet man das Lösungfsmittel in einer Menge von 100 bis 2 000 Gew.%, vorzugsweise von 200 bis 700 Gew.%, bezogen auf Ausgangsstoff II.

Als Säureakzretoren können für die Umsetzung A alle üblichen Säurebindemittel verwendet werden. Hierzu gehören vorzugsweise tertiäre Amine, Erdalkalimetallverbindungen, Ammoniumverbindungen und Alkalimetallverbindungen sowie entsprechende Gemische. Auch Zinkverbindungen können verwendet werden. Als basische Verbindungen kommen z.B. in Betracht: Kaliumhydroxid, Natriumhydroxid, Kaliumcarbonat, Natriumcarbonat, Lithiumhydroxid, Lithiumcarbonat, Natriumbicarbonat, Kaliumcarbonat, Calciumhydroxid, Calciumoxid, Bariumoxid, Magnesiumhydroxid, Magnesiumoxid, Bariumhydroxid, Calciumcarbonat, Magnesiumcarbonat, Magnesiumbicarbonat, Magnesiumacetat, Zinkhydroxid, Zinkoxid, Zinkcarbonat, Zinkbicarbonat, Zinkacetat, Natriumformiat, Natriumacetat, Trimethylamin, Triethylamin, Tripropylamin, Triisopropylamin, Tributylamin, Triisobutylamin, Tri-sec.butylamin, Tri-tert.-butylamin, Tribenzylamin, Tricyclohexylamin, Triamylamin, Trihexylamin, N,N-Dimethylanilin, N,N-Diethylanilin, N,N-Dipropylanilin, N,N-Dimethyltoluidin, N,N-Diethyltoluidin, N,N-Dipropyltoluidin, N,N-Dimethyl-p-aminopyridin, N,N-Diethyl-p-aminopyridin, N,N-Dipropyl-p-aminopyridin, N-Methylpyrrolidin, N-Ethylpyrrolidon, N-Methylpiperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, α-Picolin, β-Picolin, γ-Picolin, Isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin, N,N-Dimethycyclohexylamin, 2,6-Lutidin, 2,4-Lutidin, Trifurfurylamin, Triethylendiamin.

Zweckmäßigerweise verwendet man den Säureakzeptor in einem Über- oder Unterschuß von bis zu 20%, bezogen auf den Ausgangsstoff II. Als Katalysatoren für die Umsetzung B können die obengenannten anorganischen oder tertiären organischen Basen verwendet werden; geeignet sind ferner Alkalimetall- und Erdalkalimetallhydride, wie Lithiumhydrid, Natriumhydrid, Calciumhydrid. Zweckmäßigerweise verwendet man den Katalysator in einem Unterschuß von 0,5 bis 30%, bezogen auf den Ausgangsstoff IV.

Die Ausgangsstoffe der Formeln II und III werden in ungefähr stöchiometrischem Verhältnis eingesetzt, d. h. zweckmäßigerweise in einem Unter-bzw. Überschuß von bis zu 10% Ausgangsstoff der Formel III gegenüber Ausgangsstoff der Formel II.

Die Ausgangsstoffe der Formel IV und V können in stöchiometrischem Verhältnis eingesetzt werden, zweckmäßigerweise verwendet man jedoch einen Überschuß von bis zu 30% Ausgangsstoff der Formel V gegenüber Ausgangsstoff der Formel IV. Man kann jedoch auch den Ausgangsstoff der Formel V direkt als Lösungsmittel verwenden.

Zweckmäßigerweise wird das Verfahren A so durchgeführt, daß man über 2 Zuführungen das

Carbonsäurehalogenid der Formel III und die äquivalente Menge an Säureakzeptor bei einer Temperatur zwischen 0 und 80°C zu einer ungefähr äquivalenten Menge der Anthranilsäureverbindung der Formel II in einem inerten organischen Lösungsmittel bzw. in Wasser zulaufen läßat. Dann rührt man 5 bis 60 Minuten bei Raumtemperatur nach. Zur Isolierung der N-Acyl-anthranilsäurederivate kann man diese mit Wasser, verdünnter Säure, bzw. falls der Rest $R^3$ in kovalenter Form gebunden ist, mit verdünntem Alkali zur Abtrennung von Nebenprodukten, wie nicht umgesetzter Ahthranilsäureverbindung, Säurechlorid oder Basenhydrochlorid, behandeln, trocknen und dann einengen. Gegebenenfalls können die Endprodukte auch durch Umkristallisieren oder Chromatographie gereinigt werden.

Das Verfahren B wird zweckmäßigerweise so durch geführt, daß man das 4H-3,1-Benzoxazin-4-on der Formel IV in eine mindestens äquivalente Lösung des Ausgangsstoffes der Formel V in einem inerten organischen Lösungsmittel, bzw. direkt in einem Überschuß des Ausgangsstoffs der Formel V, gegebenenfalls in Gegenwart einer anorganischen oder einer tertiären organischen Base als Katalysator, bei einer Temperatur zwischen 0 und 150°C einträgt. Dann rührt man noch 10 bis 240 Minuten bei 25 bis 190°C nach. Man kann jedoch auch den Ausgangsstoff der Formel V in eine Lösung des 4H-3,1-Benzoxazin-4-ons der Formel IV entragen und wie oben beschrieben umsetzen. Zur Isolierung der N-Acyl-anthranilsäurederivate kann man gegebenenfalls überschüssigen Ausgangsstoff der Formel V unter vermindertem Druck entfernen und dann wie bei Verfahren A verfahren.

Die folgenden Beispiele erläutern die Herstellung der N-Acylanthranilsäurederivatender Formeln I, Ia und Ib.

Beispiel 1

358 Teile Benzoylchlorid und 258 Teile Triethylamin werden über zwei Zuführungen unter Rühren bei 25 bis 30°C innehalb von 20 Minuten zu einer Mischung von 350 Teilen 6-Fluoranthranilsäure in 4 000 Teilen Methylenchlorid gegeben. Nach 30 Minuten Rühren bei 25°C wird das Reaktionsgemisch in 4 000 Teile verdünnter Salzsäure eingerührt. Der ausgefallene Niederschlag wird abgesaugt, mit Wasser gewaschen, in verdünnter Natronlauge aufgenommen und dreimal mit Essigester extrahiert. Annschließend wird die wäßrige Phase in verdünnte Salzsäure eingerührt, der ausgefallene Niederschlag abgesaugt und mit Wasser gewaschen. Nach dem Trocknen erhält man 560 Teile (96% der Theorie) N-Benzoyl-6-fluoranthranilsäure vom Fp. 169 bis 171°C.

Beispiel 2

9 g 5-Fluor-2-phenyl-3,1-benzoxazin-4-on und 35,7 kg Phenol werden mit einem Plätzchen Natriumhydroxid als Katalysator bei 45°C vermischt und dann 3 Stunden bei 185°C gerührt. Nach dem Abdestillieren des überschüssigen Phenols unter vermindertem Druck wird der verbleibende Rückstand zunächst mit Wasser verrührt und abgesaugt und dann nochmals mit einer Mischung von Petrolether und diethylether 2:1 verrührt und abgesaugt. Nach dem Trocknen erhält man 10 g (78% der Theorie) N-Benzoyl-6-fluoranthranilsäurephenylester vom Fp. 130 bis 132°C.

Beispiel 3

Eine Mischung von 5 Teilen 5-Chlor-3-(3'-difluormethoxy-phenyl)-3,1-benzoxazin-4-on und 14 Teile Methanol wird mit 0,2 Teilen Triethylamin als Katalysator versetzt und 2 Stunden bei 65°C gerührt. Nach dem Einengen unter vermindertem Druck, Verreiben des Rückstandes mit Wasser, Waschen und Trocknen erhält 5,3 Teile (96% der Theorie) N-(3-Difluormethoxybenzoyl)-6-chloranthranilsäuremethylester vom Fp. 73 bis 75°C.

| Verbindung Nr. | $R^1$ | Y | Y' | $R^2$ | $R^3$ | Fp [°C]/$n_D^{25}$ |
|---|---|---|---|---|---|---|
| 4 | F | O | O | Phenyl | $CH_3$ | 118—121 |
| 5 | F | O | O | Phenyl | $C_2H_5$ | 88— 91 |
| 6 | F | O | O | Phenyl | $1—C_3H_7$ | 67— 69 |
| 7 | F | O | O | Phenyl | $CH_2—CH{=}CH_2$ | 88— 91 |
| 8 | F | O | O | Phenyl | Propargyl | 148—150 |
| 9 | F | O | O | Phenyl | $HN^{\oplus}(CH_2H_5)_3$ | |
| 10 | F | O | O | Phenyl | $H_2N^{\oplus}(CH_3)_2$ | |
| 11 | F | O | O | Phenyl | K | |
| 12 | F | O | O | Phenyl | $CH_2—CH_2CN$ | |
| 13 | F | O | O | Phenyl | n-$C_4H_9$ | 42— 43 |
| 14 | F | O | O | Phenyl | $CH_2—CO—CH_3$ | |
| 15 | F | O | O | Phenyl | $CH_2—CH_2—CO—CH_3$ | |
| 16 | F | O | S | Phenyl | $CH_3$ | |
| 17 | F | O | S | Phenyl | n—$C_3H_7$ | |
| 18 | F | O | O | Phenyl | $CH_2—CH_2—O—CH_3$ | 70— 74 |
| 19 | F | O | O | Phenyl | $CH_2—CH_2—O—CH_2H_5$ | |
| 20 | F | O | O | Phenyl | $CH_2—CH_2—O—CH_2—CH{=}CH_2$ | |
| 21 | F | O | O | Phenyl | $CH_2CH_2—O—CH_2—C{\equiv}CH$ | |
| 22 | F | O | O | Phenyl | $CH_2—CH_2—S—CH_3$ | |
| 23 | F | O | O | Phenyl | $CH_2—CH_2—Cl$ | 116—119 |
| 24 | F | O | O | Phenyl | $CH_2—CCl_3$ | |
| 25 | F | O | O | Phenyl | $CH_2—CH{=}CH—CH_3$ | |
| 26 | F | O | O | Phenyl | $CH_2—C{\equiv}C—CH_3$ | |
| 27 | F | O | O | Phenyl | $(CH_2)_2—O—(CH_2)_2—O—CH_3$ | 1,5726 |
| 28 | F | O | O | Phenyl | $(CH_2)_2—O—(CH_2)_2—O—CH_2H_5$ | |
| 29 | F | O | O | Phenyl | $(CH_2)_2—O—(CH_2)_2—O—n—C_3H_7$ | |
| 30 | F | O | O | Phenyl | $(CH_2)_2—O—(CH_2)_2—O—CH_2—CH_2—CH{=}CH_2$ | |
| 31 | F | O | O | Phenyl | $(CH_2)_2—O—(CH_2)_2—O—CH_2—C{\equiv}Ch$ | |
| 32 | F | O | O | Phenyl | $C(CH_3)_3$ | 84— 86 |
| 33 | F | O | O | Phenyl | $CH_2CO_2CH$ | |
| 34 | F | O | O | Phenyl | $CH_2—CO_2C_2H_5$ | |

| Verbindung Nr. | $R^1$ | Y | Y' | $R^2$ | $R^3$ | Fp [°C]/$n_D^{25}$ |
|---|---|---|---|---|---|---|
| 35 | F | O | O | Phenyl | $CH_2—CO_2—nC_4H_9$ | |
| 36 | F | O | O | Phenyl | $CH(CH_3)—CO_2CH_3$ | |
| 37 | F | O | O | Phenyl | $CH_2—C(O)—S—CH_3$ | |
| 38 | F | O | O | Phenyl | Benzyl | 82— 83 |
| 39 | F | O | O | Phenyl | 4-Chlorbenzyl | |
| 40 | F | O | O | Phenyl | 2,4-Dichlorbenzyl | 150—153 |
| 41 | F | O | O | Phenyl | 3,4-Dichlorbenzyl | 135—137 |
| 42 | F | O | O | Phenyl | 4-Methylbenzyl | |
| 43 | F | O | O | Phenyl | 2-Methylbenzyl | |
| 44 | F | O | O | Phenyl | 3-Trifluormethylbenzyl | |
| 45 | F | O | O | Phenyl | 2-Methoxybenzyl | |
| 46 | F | O | O | Phenyl | 4-Methoxybenzyl | |
| 47 | F | O | O | Phenyl | 4-Trifluormethoxybenzyl | |
| 48 | F | O | O | Phenyl | 2-Nitrobenzyl | |
| 49 | F | O | O | Phenyl | 4-Nitrobenzyl | |
| 50 | F | O | O | Phenyl | 2-Chlor-4-nitrobenzyl | |
| 51 | F | O | O | Phenyl | 4-Cyanobenzyl | |
| 52 | F | O | O | Phenyl | 2-Phenoxy-ethyl | |
| 53 | F | O | O | Phenyl | 3-Phenoxy-propyl | |
| 54 | F | O | O | Phenyl | 2-Phenoxy-propyl | |
| 55 | F | O | O | Phenyl | 4-Phenoxy-butyl | |
| 56 | F | O | O | Phenyl | 2-Phenoxy-vinyl | |
| 57 | F | O | O | Phenyl | 3-Phenoxy-prop-1-enyl | |
| 58 | F | O | O | Phenyl | 4-Phenoxy-n-but-2-inyl | |
| 59 | F | O | O | Phenyl | 2-[4'-Chlorphenoxy])-ethyl | |
| 60 | F | O | O | Phenyl | 2-(2',4'-Dichlorphenoxy)-ethyl | |
| 61 | F | O | O | Phenyl | 2-(4'-Nitrophenoxy)-ethyl | |
| 62 | F | O | O | Phenyl | 2-(3'-Trifluormethylphenoxy)--ethyl | |
| 63 | F | O | O | Phenyl | 2-(2'-Chlor-4'-trifluormethyl-phenoxy)-ethyl | |
| 64 | F | O | O | Phenyl | 2-Phenyl-ethyl | 102—104 |
| 65 | F | O | O | Phenyl | 3-Phenyl-n-propyl | |

| Verbindung Nr. | $R^1$ | Y | Y' | $R^2$ | $R^3$ | Fp [°C]/$n_D^{25}$ |
|---|---|---|---|---|---|---|
| 66 | F | O | O | Phenyl | 4-Phenyl-n-butyl | |
| 67 | F | O | O | Phenyl | 2-(p-Chlorphenyl)-ethyl | |
| 68 | F | O | O | Phenyl | 2-(2',4'-Dichlorphenyl)-ethyl | |
| 69 | F | O | O | Phenyl | 2-(p-Tolyl)-ethyl | |
| 70 | F | O | O | Phenyl | 2-(p-Anisyl)-ethyl | |
| 71 | F | O | O | Phenyl | 2-(p-Nitrophenyl)-ethyl | |
| 72 | F | O | O | Phenyl | 4-(p-Chlorphenoxy)-but-2-in-yl | |
| 73 | Cl | O | O | 3-Difluorchlorphenyl | $CH_3$ | |
| 74 | F | O | O | 4-Difluorchlormethoxyphenyl | $CH_3$ | |
| 75 | F | O | O | 3-Difluormethoxyphenyl | $CH_3$ | 102—206 |
| 76 | F | O | O | 4-Difluorchlormethoxyphenyl | n-$C_3H_7$ | |
| 77 | F | O | O | 3-Difluormethoxyphenyl | n-$C_3H_7$ | |
| 78 | F | O | O | 4-(1',1',2',2'-Tetra-fluorethoxy)-phenyl | $CH_3$ | |
| 79 | F | O | O | 4-(1',1',2',2'-Tetra-fluorethoxy)-phenyl | n-$C_3H_7$ | |
| 80 | F | O | O | 4-Trifluormethoxyphenyl | $CH_3$ | |
| 81 | F | O | O | 4-Trifluormethoxyphenyl | $CH_2—CH_2—O—CH_3$ | |
| 82 | Cl | O | O | 3-Trifluormethylphenyl | $CH_3$ | |
| 83 | Cl | O | O | 3-Trifluormethylphenyl | $CH_2—CH_2—O—CH_3$ | |
| 84 | Cl | O | O | 3-Difluormethoxyphenyl | $CH_3$ | |
| 85 | Cl | O | O | 3-Difluormethoxyphenyl | n-$C_3H_7$ | |
| 86 | Cl | O | O | 4-Difluormethoxyphenyl | $CH_3$ | 120—123 |
| 87 | Cl | O | O | 4-Difluormethoxyphenyl | $CH_2—CH_2—O—CH_3$ | |
| 88 | Cl | O | O | 4-Difluorchlormethoxyphenyl | $CH_3$ | |
| 89 | Cl | O | O | 4-Difluorchlormethoxyphenyl | n-$C_3H_7$ | |
| 90 | Cl | O | O | 3-Trifluormethoxyphenyl | $CH_3$ | 90— 93 |
| 91 | Cl | O | O | 3-Trifluormethoxyphenyl | $CH_2—CH_2—O—CH_3$ | |
| 92 | Cl | O | O | 3-(1',1',2',2'-Tetra-fluorethoxy)-phenyl | $CH_3$ | |
| 93 | Cl | O | O | 3-(1',1',2',2'-Tetra-fluorethoxy)-phenyl | n-$C_3H_7$ | |
| 94 | Cl | O | O | 3-Difluorchlormethoxy-phenyl | $CH_3$ | |

| Verbindung Nr. | $R^1$ | Y | Y' | $R^2$ | $R^3$ | Fp [°C]/$n_D^{25}$ |
|---|---|---|---|---|---|---|
| 95 | Cl | O | O | 3-Difluorchlormethoxy-phenyl | n-$C_3H_7$ | |
| 96 | Cl | O | O | 3-Fluorphenyl | $CH_3$ | 80— 82 |
| 97 | Cl | O | O | 3-Fluorphenyl | $CH_2—CH_2—O—CH_3$ | |
| 98 | Cl | O | O | 3-Trifluormethylmercapto- -phenyl | $CH_3$ | |
| 99 | Cl | O | O | 3-Trifluormethylmercapto- -phenyl | n-$C_3H_7$ | |
| 100 | Cl | O | O | 4-Trifluormethyl-phenyl | $CH_3$ | |
| 101 | Cl | O | O | 4-Trifluormethyl-phenyl | $CH_2—CH_2—O—CH_3$ | |
| 102 | Cl | O | O | 4-Difluorchlormethylmercapto- phenyl | $CH_3$ | |
| 103 | Cl | O | O | 4-Difluorchlormethylmercapto- phenyl | n-$C_3H_7$ | |
| 104 | F | O | O | 3-Trifluormethoxyphenyl | $CH_3$ | |
| 105 | F | O | O | 3-Trifluormethoxyphenyl | n-$C_3H_7$ | |
| 106 | F | O | O | 3-Trifluormethylphenyl | $CH_3$ | |
| 107 | F | O | O | 3-Trifluormethylphenyl | $CH_2—CH_2—O—CH_3$ | |
| 108 | F | O | O | 4-Trifluormethylphenyl | $CH_3$ | |
| 109 | F | O | O | 4-Trifluormethylphenyl | $CH_2—CH_2—O—CH_3$ | |
| 110 | F | S | S | Phenyl | H | |
| 111 | F | S | O | Phenyl | $CH_3$ | |
| 112 | F | O | S | Phenyl | $CH_3$ | |
| 113 | Cl | O | S | 3-Trifluormethoxyphenyl | $CH_3$ | |
| 114 | Cl | O | O | 4-Trifluoromethoxyphenyl | $CH_3$ | |
| 115 | F | O | O | 3-(1',1',2',2'-Tetra- fluorethoxy)-phenyl | $CH_3$ | |
| 116 | $NO_2$ | O | O | 3-Trifluormethylphenyl | $CH_3$ | |
| 117 | F | O | O | 3-Fluorphenyl | H | 146—149 |
| 118 | F | O | O | 3-Difluorchlormethylphenyl | $CH_3$ | 180—184 |
| 119 | F | O | O | 4-Fluorphenyl | H | 186—190 |
| 120 | Cl | O | O | 3-Difluorchlormethylmercapto- -phenyl | $CH_3$ | |
| 121 | F | O | O | 4-Difluormethoxy-phenyl | $CH_3$ | |

| Verbindung Nr. | $R^1$ | Y | Y' | $R^2$ | $R^3$ | Fp [°C]/$n_D^{25}$ |
|---|---|---|---|---|---|---|
| 122 | F | O | O | 3-Difluorchlormethyl-mercapto-phenyl | $CH_3$ | |
| 123 | F | O | O | Phenyl | $(CH_2)_2—O—n—C_3H_7$ | 55— 57 |
| 124 | Cl | O | O | 3-Methylsulfonyl-phenyl | $CH_3$ | 132—134 |
| 125 | F | O | O | Phenyl | $(CH_2)_2—O—t—C_4H_9$ | 82— 84 |
| 126 | F | O | O | Phenyl | 4-Tolyl | |
| 127 | F | O | O | Phenyl | 4-Chlorphenyl | |
| 128 | F | O | O | Phenyl | 2,4-Dichlorphenyl | |
| 129 | F | O | O | Phenyl | 4-Trifluormethylphenyl | |
| 130 | F | O | O | Phenyl | 4-Nitrophenyl | |
| 131 | F | O | O | Phenyl | 3-(2,4-Dichlorphenoxy)--n-propyl | 96— 99 |
| 132 | $CH_3$ | O | O | 3-Trifluormethoxyphenyl | $CH_3$ | 43— 45 |
| 133 | $CH_3$ | O | O | 3-Difluorchlormethoxyphenyl | $CH_3$ | 38— 40 |
| 134 | F | O | S | Phenyl | H | |
| 135 | F | O | S | Phenyl | n-$C_3H_7$ | |
| 136 | F | O | S | Phenyl | 2-$CX_4H_9$ | 60— 62 |
| 137 | F | O | O | Phenyl | 2-Pentyl | |
| 138 | F | O | O | Phenyl | 3-Pentyl | |
| 139 | F | O | O | Phenyl | Cyclopentyl | |
| 140 | F | O | O | Phenyl | Cyclohexyl | |
| 141 | F | O | O | Phenyl | $H_2^{\oplus}H(CH_2—CH_2—OH)_2$ | 98—100 |
| 142 | F | O | O | Phenyl | s-$C_4H_9$ | 1.5632 |
| 143 | F | O | O | Phenyl | i-$C_4H_9$ | 1.5492 |

Die N-Acylanthranilsäurederivate der Formel I können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Napththaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern

(Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispegier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Napththalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Napththalins bzw. der Naphthalinsulfonsäuren mit Phenol und Formaldehyd, Polyoxyethylenoctylphenoläther, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind:

I. Man vermischt 90 Gewichtsteile der Verbindung Nr. 1 mit 10 Gewichtsteilen N-Methyl-α-pyrrolidon und erhält eine Lösung, die zur Anwendung in Form kleinster Tropfen geeignet ist.

II. 20 Gewichtsteile der Verbindung Nr. 5 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

III. 20 Gewichtsteile der Verbindung Nr. 18 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

IV. 80 Gewichtsteile der Verbindung Nr. 5 werden mit 3 Gewichtsteilen des Natriumsalzes der Diisobutyl-naphthalin-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

V. 5 Gewichtsteile der Verbindung Nr. 1 werden mit 95 Gewichtsteilen feinteiligem Kaolin vermischt. Man erhält auf diese Weise ein Stäubemittel, das 5 Gewichtsprozent des Wirkstoffs enthält.

VI. 30 Gewichtsteile der Verbindung Nr. 18 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mti guter Haftfähigkeit.

VII. 20 Teile der Verbindung Nr. 1 werden mit 2 Teilen Calciumsalz der Dodecylbenzolsulfonsäure, 8 Teilen Fettalkohol-polyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Die Applikation der Wirkstoffe bzw. der sie enthaltenden herbiziden Mittel kann im Vorauflauf- oder im Nachauflaufverfahren erfolgen. Vorzugsweise werden sie nach dem Auflaufen der unerwünschten Pflanzenn ausgebracht. Sind die Wirkstoffe bei Nachauflaufanwendung für gewisse Kulturpflanzen weniger verträglich, können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätte darunter wachsender unerwünschter Pflanzen oder die unbedeckte Bodenfläche gelangen (post-directed, lay-by).

Die Aufwandmengen an Wirkstoff betragen je nach Jahreszeit, Zielpflanzen und Wachstumsstadien, Bodenart und Anwendungsverfahren 0,1 bis 5, vorzugsweise 0,25 bis 2,0 kg/ha.

Die herbizide Wirkung der N-Acyl-anthranilsäurederivate der Formel I läßt sich durch Gewächshausversuche zeigen:

Als Kulturgefäße dienen Plastikblumentöpfe mit 300 $cm^3$ Inhalt und lehmigem Sand mit etwa 1,5% Humus als Substrat. Zum Zwecke der Nachauflaufbehandlung zieht man die Testpflanzen je nach Wuchsform erst bis zu einer Wuchshöhe von 3 bis 15 cm an und behandelt sie danach. Die Reispflanzen werden in einem mit Torfmull angereicherten Substrat angezogen. Es werden entweder direkt gesäte und in den gleichen Gefäßen aufgewachsene Pflanzen verwendet, oder aber solche, die erst als Keimpflanzen getrennt angezogen und einige Tage vor der Behandlung in die Versuchsgefäße verpflanzt werden. Die Aufwandmengen betragen 0,5 bis 3,0 kg Wirkstoff/ha.

Die Versuchsgefäße werden im Gewächshaus aufgestellt, wobei für wärmeliebende Arten wärmere Bereiche (20 bis 35°C) und für solche gemäßigter Klimate 10 bis 20°C bevorzugt werden. Die Versuchsperiode erstreckt sich über 2 bis 4 Wochen. Während dieser Zeit werden die Pflanzen gepflegt, und ihre Reaktion auf die einzelnen Behandlungen wird ausgewertet. Bewertet wird nach einer Skala von 0 bis 100. Dabei bedeutet 100 kein Aufgang der Pflanzen bzw. völlig Zerstörung zumindest der oberirdischen Teile.

Die in den Gewächshausversuchen verwendeten Pflanzen setzen sich aus folgenden Arten zusammen:

Arachis hypogaea (Erdnuß), Centaurea cyanus (Kornblume), Chenopodium album (weißer Gänsefuß). Chrysanthemum segetum (Saatwucherblume), Cyperus iria, Desmodium tortuosum, Hordeum vulgare (Gerste), Mercurialis annua (einjähriges Bingelkraut), Nicandra physaloides (Giftbeere), Oryza sativa (Reis), Sesbania exaltata (Turibaum), Urtica urens (kleine Brennessel), Zea mays (Mais), Cyperus esculentus (Erdmandel), Avena fatua (Saathafer), Galium aparine (Klettenlabkraut).

Die Versuche zeigen, daß beispielsweise die Verbindungen Nr. 1, 4 und 18 bei Nachauflaufanwendung von 0,5 kg Wirkstoff/ha eine selektive herbizide Wirkung, insbesondere gegen bestimmte unerwünschte Pflanzen wärmerer Klimata, haben. Ebenfalls selektiv wirksam sind die Verbindungen Nr. 2 und 141 bei Nachauflaufanwendung von 1,0 kg Wirkstoff/ha. Bei guter Verträglichkeit für die Kulturpflanzen bekämpfen beispielsweise die Verbindungen Nr. 3, 38 und 136 bei Nachauflaufanwendung von 3,0 kg Wirkstoff/ha unerwünschte Pflanzen in Kulturpflanzen aus der Familie der Gräser.

In Anbetracht der guten Verträglichkeit für zahlreiche breitblättrige und andere Kulturen und der Vielseitigkeit der Applikationsmethoden können die erfindungsgemäßen Herbizide ode diese enthaltende Mittel noch in einer weiteren großen Zahl von Kulturpflanzen zur Beseitigung unerwünschten Pflanzenwuchses eingesetzt werden.

In Betracht kommen beispielsweise folgende Kulturen:

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Beta vulgaris spp. esculenta | Rote Rübe |
| Camellia sinensis | Teestrauch |
| Carthamus tinctorius | Saflor — Färberdistel |
| Caryg illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |

| Botanischer Name | Deutscher Name |
|---|---|
| Cucumis melo | Melone |
| Cucumis sativus | Gurke |
| Cynodon dactylon | Bermudagras |
| Elaeis guineensis | Ölpalme |
| Fragaria vesca | Erdbeere |
| Glyoine max | Sojabohne |
| Gossypium hirsutum (Gossypium arboreum Gossypium herbaceum Gossypium vitifolium) | Baumwolle |
| Helianthus annuus | Sonnenblume |
| Helianthus tuberosus | Topinambur |
| Heva brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |

| Botanischer Name | Deutscher Name |
|---|---|
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sasamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vica faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und gegebenfalls auch zur Erzielung synergistischer Effekte können die N-Acylanthranilsäurederivate der Formel I bzw. sie enthaltende herbizide Mittel mit zahlreichen Vertretern gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, andere Harnstoffe, Diphenylether, Triazinone, Uracile, Cyclohexandione, Benzofuranderivate und andere in Betracht.

Außerdem kann es von Nutzen sein, die N-Acyl-anthranilsäurederivate der Formel I bzw. sie enthaltende herbizide Mittel allein oder in Kombination mit anderen Hebiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interese ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

**Patentansprüche**

1. N-Acylanthranilsäurederivate der Formel

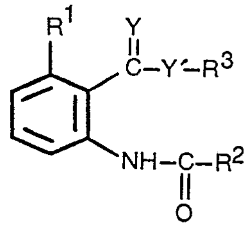

(I),

in der

$R^1$ Halogen, Nitro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto,

$R^2$ einen durch $C_1$—$C_4$-Halogenalkyl, $C_1$—$C_4$-Halogenalkoxy, $C_1$—$C_4$-Halogenalkylmercapto, $C_1$—$C_4$-Halogenalkylsulfinyl, $C_1$—$C_4$-Halogenalkylsulfonyl oder $C_1$—$C_4$-Alkylsulfonyl m- oder p- oder m- und p-substituierten Phenylrest,

$R^3$ einen gegebenenfalls durch Halogen, Cyano, Thiocyano, Nitro, $C_2$—$C_4$-Alkylcarbonyl, $C_1$—$C_4$-Alkoxy, $C_2$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alkinylmercapto, $C_2$—$C_5$-Alkoxycarbonyl, $C_2$—$C_5$-Alkylmercaptocarbonyl oder $C_3$—$C_4$-Alkenylcarbonyl substituierten, unverzweigten oder verzweigten Alkyl-, Alkenyl- oder Alkinylrest mit bis zu 12 Kohlenstoffatomen einen gegebenenfalls durch $C_1$—$C_4$-Alkyl, $C_1$—$C_4$-Alkoxy, $C_1$—$C_4$-Alkylmercapto, $C_1$—$C_4$-Alkylsulfonyl, Halogen, Trifluormethyl, Nitro oder Cyano substituierten $C_3$—$C_7$-Cycloalkylrest, einen 2-(2-Alkoxy-ethoxy)-ethyl-, 2-(2-Alkenoxy-ethoxy)-ethyl oder 2-(2-Alkinoxy-ethoxy)-ethylrest mit bis zu 8 Kohlenstoffatomen, einen 3-(2-Alkoxy-ethoxy)-n-propylrest mit bis zu 9 Kohlenstoffatomen, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest, einen gegebenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxyalkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten,

mit der Maßgabe, daß wenn $R^1$ Fluor bedeutet, $R^2$ auch für einen gegebenenfalls durch Halogen substituierten Phenylrest und $R^3$ auch für einen gegebenenfalls durch $C_1$—$C_4$-Alkyl, $C_1$—$C_4$-Hydroxyalkyl, $C_2$—$C_4$-Halogenalkyl oder $C_2$—$C_5$-Alkoxyalkyl substituierten Ammoniumrest stehen können.

2. N-Acyl-anthranilsäurederivate der Formel I gemäß Anspruch 1, dadurch gekennzeichnet, daß $R^3$ einen gesättigten oder ungesättigten, unverzweigten oder verzweigten, gegebenenfalls durch Halogen oder $C_1$—$C_4$-Alkoxy substituierten Alkyl-, Alkenyl- oder Alkinylrest mit bis zu 4 Kohlenstoffatomen bedeutet.

3. N-Benzoyl-6-fluor-anthranilsäureisopropylester.

4. Verfahren zur Herstellung von N-Acyl-anthranilsäurederivaten der Formel I gemäß Anspruch 1, dadurch gekennzeichnet, daß man ein gegebenenfalls substituiertes Anthranilsäurederivat der Formel

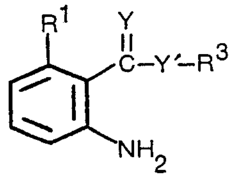

(II),

in der

$R^1$, Y und Y' im Anspruch 1 genannten Bedeutungen haben und $R^3$ die in Anspruch I genannten Bedeutungen außer Wasserstoff und Alkalimetall- oder Erdalkalimetallatom hat, mit ungefähr stöchiometrischen Mengen eines Carbonsäurehalogenids der Formel

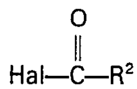

(III),

in der $R^2$ die im Anspruch 1 genannten Bedeutungen hat und Hal für Halogen steht, in Gegenwart eines inerten organischen Lösungsmittels oder von Wasser und gegebenenfalls in Anwesenheit eines Säureakzeptors bei einer Temperatur im Bereich zwischen 0 und 80°C umsetzt.

5. Verfahren zur Herstellung von N-Acyl-anthranilsäurederivaten der Formel I gemäß Anspruch 1, dadurch gekennzeichnet, daß man ein gegebenenfalls substituiertes 4H-3,1-Benzoxazinderivat der Formel

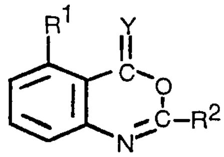

(IV),

in der

$R^1$, $R^2$ und Y die im Anspruch 1 genannten Bedeutungen haben, mit mindestens stöchiometrischen Mengen einer Hydroxy- oder Thioverbindung der Formel

$R^3$—Y'—H (V),

in der

$R^3$ und Y' die im Anspruch 1 genannten Bedeutungen haben, in Gegenwart eines inerten organischen Lösungsmittels oder eines überschusses an Verbindung der Formel V gegebenenfalls in Gegenwart einer anorganischen oder einer tertiären organischen Base als Katalysator bei einer Temperatur im Bereich zwischen 0 und 190°C umsetzt.

6. Herbizid, enthaltend ein N-Acylanthranilsäurederivat der Formel

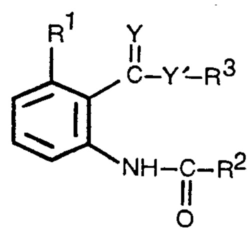

(Ia),

in der

$R^1$ Halogen, Nitro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto,

$R^2$ einen gegebenenfalls durch $C_1$—$C_4$-Alkyl substituierten Thienylrest oder einen durch $C_1$—$C_4$-Halogenalkyl, $C_1$—$C_4$-Halogenalkoxy, $C_1$—$C_4$-Halogenalkylmercapto, $C_1$—$C_4$-Halogenalkylsulfinyl, $C_1$—$C_4$-Halogenalkylsulfonyl oder $C_1$—$C_4$-Alkylsulfonyl m- oder p- oder m- und p-substituierten Phenylrest, $R^3$ einen gegebenenfalls durch Halogen, Cyano, Thiocyano, Nitro, $C_2$—$C_4$-Alkylcarbonyl, $C_1$—$C_4$-Alkoxy, $C_1$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alkinylmecapto, $C_2$—$C_5$-Alkoxycarbonyl, $C_2$—$C_5$-Alkylmercaptocarbonyl oder $C_3$—$C_4$-Alkenylcarbonyl substituierten, unverzweigten oder verzeigten Alkyl, Alkenyl- oder Alkinylrest mit bis zu 12 Kohlenstoffatomen, einen gegebenfalls durch $C_1$—$C_4$-Alkyl, $C_1$—$C_4$-Alkoxy, $C_1$—$C_4$-Alkylmercapto, $C_1$—$C_4$-Alkylsulfonyl, Halogen, Trifluormethyl, Nitro oder Cyano substituierten $C_3$—$C_7$-Cycloalkylrest, einen 2-(2-Alkoxy-ethoxy)-ethyl-, 2-(2-Alkenoxy-ethoxy)-ethyl- oder 2-(2-Alkinoxy-ethoxy)-ethylrest mit bis zu 8 Kohlenstoffatomen, einen 3-(2-Alkoxy-ethoxy)-n-propylrest mit bis zu 9 Kohlenstoffatomen, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy,

$C_1$—$C_4$-Alkylmercapto, $C_1$—$C_4$-Halogenalkylmercapto, Nitro oder Cyano substituierten Phenylrest, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxy-alkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten,

mit der Maßgabe, daß wenn $R^1$ Fluor bedeutet, $R^2$ auch für einen gegebenenfalls durch Halogen substituierten Phenylrest, und $R^3$ auch für ein Alkalimetall- oder Erdalkalimetallatom oder einen gegebenenfalls durch $C_1$—$C_4$-Alkyl-, $C_1$—$C_4$-Hydroxyalkyl, $C_1$—$C_4$-Halogenalkyl oder $C_2$—$C_5$-Alkoxyalkyl substituierten Ammoniumrest stehen können.

7. Herbizid nach Anspruch 6, dadurch gekennzeichnet, daß es ein N-Acylanthranilsäurederivat der Formel Ia enthält, wobie $R^1$ für Halogen, $R^2$ für einen Thienyl-, einen durch $C_1$—$C_4$-Halogenalkyl, $C_1$—$C_4$-Halogenalkoxy, $C_1$—$C_4$-Halogenalkylmercapto substituierten Phenylrest oder einen gegebenenfalls halogen-substituierten Phenylrest, falls $R^1$ Fluor ist, $R^3$ für einen unverzweigten oder verzweigten, gegebenenfalls durch halogen, Cyano, $C_2$—$C_4$-Alkylcarbonyl, $C_1$—$C_4$-Alkoxy, $C_2$—$C_4$-Alkenyloxy, $C_2$—$C_4$-Alkinyloxy oder $C_1$—$C_4$-Alkylmercapto substituierten Alkyl-, Alkenyl- oder Alkinylrest mit bis zu 6 Kohlenstoffatomen, einen $C_3$—$C_7$-Cycloalkylrest, einen durch $C_2$—$C_5$-Alkoxycarbonyl oder $C_2$—$C_5$-Alkylmercaptocarbonyl substituierten Alkylrest mit bis zu 3 Kohlenstoffatomen einen 2-(2-Alkoxy-ethoxy)-ethyl-, 2-(2-Alkenoxy-ethoxy)-ethyl- oder 2-(2-Alkinoxy-ethoxy)-ethylrest mit bis zu 8 Kohlenstoffatomen, einen gegebenenfalls durch Alkyl, Halogenalkyl, Alkoxy, Halogenalkoxy mit jeweils bis zu 2 Kohlenstoffatomen, Halogen, Nitro oder Cyano substituierten Phenylrest, oder einen gegebenenfalls durch Alkyl, Halogenalkyl, Alkoxy, Halogenalkoxy mit jeweils bis zu 2 Kohlenstoffatomen, Halogen, Nitro oder Cyano substituierten Phenoxyalkylrest mit 7 bis 10 Kohlenstoffatomen, Phenoxyalkenylrest mit 8 bis 10 Kohlenstoffatomen, Phenoxyalkinylrest mit 8 bis 10 Kohlenstoffatomen oder Phenylalkylrest mit 7 bis 10 Kohlenstoffatomen oder für den Fall, daß $R^1$ Fluor ist auch für ein Alkalimetall- oder Erdalkalimetallatom oder einen gegebenfalls durch $C_1$—$C_4$-Alkyl oder $C_1$—$C_4$-Hydroxyalkyl substituierten Ammoniumrest und Y und Y' für Sauerstoff stehen.

8. Herbizid nach Anspruch 6, dadurch gekennzeichnet, daß es ein N-Acyl-anthranilsäurederivat der Formel Ia gemäß Anspruch 1 enthält, wobei $R^3$ einen gesättigten oder ungesättigten, unverzweigten oder verzweigten Phenylrest,

$R^3$ einen gegebenenfalls durch Halogen, Cyano, Thiocyano, Nitro, $C_2$—$C_4$-Alkylcarbonyl, $C_1$—$C_4$-Alkoxy, $C_2$—$C_4$-Alkenyloxy, $C_2$—$C_4$-Alkinyloxy, $C_1$—$C_4$-Alkylmercapto, $C_2$—$C_4$-Alkenylmercapto, $C_2$—$C_4$-Alkinylmercapto, $C_2$—$C_5$-Alkoxycarbonyl, $C_2$—$C_5$-Alkylmercaptocarbonyl oder $C_3$—$C_4$-Alkenylcarbonyl substituierten, unverzweigten oder verzweigten Alkyl-, Alkenyl- oder Alkinylrest mit bis zu 12 Kohlenstoffatomen, einen gegebenenfalls durch $C_1$—$C_4$-Alkyl, $C_1$—$C_4$-Alkoxy, $C_1$—$C_4$-Alkylmercapto, $C_1$—$C_4$-Alkylsulfonyl, Halogen, Trifluormethyl, Nitro oder Cyano substituierten $C_3$—$C_7$-Cycloalkylrest, einen 2-(2-Alkoxy-ethoxy)-ethyl-, 2-(2-Alkenoxy-ethoxy)-ethyl- oder 2-(2-Alkinoxy ethoxy)-ethylrest mit bis zu 8 Kohlenstoffatomen, einen 3-(2-Alkoxy-ethoxy)-n-propylrest mit bis zu 9 Kohlenstoffatomen, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenylrest, einen gegebenenfalls durch Halogen, $C_1$—$C_4$-Alkyl, $C_1$—$C_4$-Halogenalkyl, $C_1$—$C_4$-Alkoxy, $C_1$—$C_4$-Halogenalkoxy, $C_1$—$C_4$-Alkylmercapto, $C_1$—$C_4$-Halogenalkylmercapto, Nitro oder Cyano substituierten Phenoxyalkylrest mit 7 bis 12 Kohlenstoffatomen, Phenoxyalkenylrest mit 8 bis 12 Kohlenstoffatomen, Phenoxyalkinylrest mit 8 bis 12 Kohlenstoffatomen oder Phenylalkylrest mit 7 bis 12 Kohlenstoffatomen,

Y Sauerstoff oder Schwefel und

Y' Sauerstoff oder Schwefel bedeuten,

mit der Maßgabe, daß wenn $R^1$ Fluor bedeutet, $R^2$ auch für einen gegebenenfalls durch Halogen substituierten Phenylrest, und $R^3$ auch für Wasserstoff, ein Alkalimetall- oder Erdalkalimetallatom oder einen gegebenenfalls durch $C_1$—$C_4$-Alkyl-, $C_1$—$C_4$-Hydroxyalkyl, $C_1$—$C_4$-Halogenalkyl oder $C_2$—$C_5$-Alkoxyalkyl substituierten Ammoniumrest stehen können.

9. Herbizid nach Anspruch 6, dadurch gekennzeichnet, daß es als N-Acylanthranilsäurederivat N-Benzoyl-6-fluor-anthranilsäureisopropylester enthält.

10. Herbizid, enthaltend inerte Zusatzstoffe und ein N-Acylanthranilsäurederivat der Formel

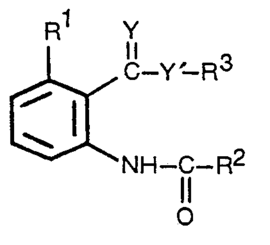

(Ib),

in der

$R^1$ Halogen, Nitgro, $C_1$—$C_4$-Alkyl, $C_1$—$C_4$-Alkoxy, $C_1$—$C_4$-Halogenalkyl, $C_1$—$C_4$-Halogenalkoxy oder $C_1$—$C_4$-Halogenalkylmercapto,

$R^2$ einen gegebenenfalls durch $C_1$—$C_4$-Alkyl substituierten Thienylrest oder einen durch $C_1$—$C_4$-Halogenalkyl, $C_1$—$C_4$-Halogenalkoxy, $C_1$—$C_4$-Halogenalkylmercapto, $C_1$—$C_4$-Halogenalkylsulfinyl, $C_1$—$C_4$-Halogenalkylsulfonyl oder $C_1$—$C_4$-Alkylsulfonyl m- oder p- oder m- und p-substituierten, gegebenenfalls duch Halogen oder $C_1$—$C_4$-Alkoxy substituierten Alkyl-, Alkenyl- oder Alkinylrest mit bis zu 4 Kohlenstoffatomen bedeutet.

11. Verfahren zur Bekämpfung unerwünschten Pflanzenwuchses, dadurch gekennzeichnet, daß man die Pflanzen und/oder die von unerwünschtem Pflanzenwuchs freizuhaltende Fläche mit einem Herbizid gemäß Anspruch 10 behandelt.

**Revendications**

1. Dérivés d'acide N-acylanthranilique de formule

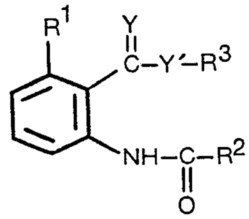

(I),

dans laquelle

$R^1$ représente halogène, nitro, alkyle en $C_1$—$C_4$, alcoxy en $C_1$—$C_4$, halogénoalkyle en $C_1$—$C_4$, halogénoalcoxy en $C_1$—$C_4$ ou halogénoalkylmercapto en $C_1$—$C_4$,

$R^2$, un reste phényle substitué en position méta ou para ou méta et para par halogénoalkyle en $C_1$—$C_4$, halogénoalcoxy en $C_1$—$C_4$, halogénoalkylmercapto en $C_1$—$C_4$, halogénoalkylsulfinyle en $C_1$—$C_4$, halogénoalkylsulfonyle en $C_1$—$C_4$ ou alkylsulfonyle en $C_1$—$C_4$,

$R^3$, un reste alkyle, alcényle ou alcinyle ayant jusqu'à 12 atomes de carbone, non ramifié ou ramifié, éventuellement substitué par halogène, cyano, thiocyano, nitro, alkylcarbonyle en $C_2$—$C_4$, alcoxy en $C_1$—$C_4$, alcényloxy en $C_2$—$C_4$, alcinyloxy en $C_2$—$C_4$, alkylmercapto en $C_1$—$C_4$, alcénylmercapto en $C_2$—$C_4$, alcinylmercapto en $C_2$—$C_4$, alcoxycarbonyle en $C_2$—$C_5$, alkylmercapto carbonyle en $C_2$—$C_5$ ou alcénylcarbonyle en $C_3$—$C_4$, un reste cycloalkyle en $C_3$—$C_7$, éventuellement substitué par alkyle en $C_1$—$C_4$, alcoxy en $C_1$—$C_4$, alkylmercapto en $C_1$—$C_4$, alkylsulfonyle en $C_1$—$C_4$, halogène, trifluorométhyle, nitro ou cyano, un reste 2-(2-alcoxy-éthoxy)-éthyle, 2-(2-alcénoxy-éthoxy)-éthyle ou 2-(2-alcinoxy-éthoxy)-éthyle ayant jusqu'à 8 atomes de carbone, un reste 3-(2-alcoxy-éthoxy)-n-propyle ayant jusqu'à 9 atomes de carbone, un reste phényle éventuellement substitué par halogène, alkyle en $C_1$—$C_4$, halogénoalkyle en $C_1$—$C_4$, alcoxy en $C_1$—$C_4$, halogénoalcoxy en $C_1$—$C_4$, alkylmercapto en $C_1$—$C_4$, halogénoalkylmercapto en $C_1$—$C_4$, nitro ou dyano, un reste phénoxyalkyle à 7 à 12 atomes de carbone, phénoxyalcényle à 8 à 12 atomes de carbone, phénoxyalcinyle à 8 à 12 atomes de carbone ou phénylalkyle à 7 à 12 atomes de carbone, éventuellement substitué par halogène, alkyle en $C_1$—$C_4$, halogénoalkyle en $C_1$—$C_4$, alcoxy en $C_1$—$C_4$, halogénoalcoxy an $C_1$—$C_4$, alkylmercapto en $C_1$—$C_4$, halogénoalkylmercapto en $C_1$—$C_4$, nitro ou cyano.

Y, oxygène ou soufre et

Y', oxygène ou soufre,

étant entendu que, si $R^1$ représente fluor, $R^2$ peut aussi être mis pour un reste phényle éventuellement substitué par halogène, et $R^3$, aussi pour un reste ammonium éventuellement substitué par alkyle en $C_1$—$C_4$, hydroxyalkyle en $C_1$—$C_4$, halogénoalkyle en $C_1$—$C_4$ ou alcoxyalkyle en $C_2$—$C_5$.

2. Dérivés d'acide N-acyl-anthranilique de formule I selon la revendication 1, caractérisés par le fait que $R^3$ représente un reste alkyle, alcényle ou alcinyle ayant jusqu'à 4 atomes de carbone, non ramifié ou ramifié, saturé ou insaturé, éventuellement substitué par halogène ou alcoxy en $C_1$—$C_4$.

3. N-benzoyl-6-fluor-anthranilate d'isopropyle.

4. Procédé de préparation de dérivés d'acide N-acyl-anthranilique de formule I selon la revendication 1, caractérisé par le fait que l'on fait réagir, en présence d'un solvant organique inerte ou d'eau et éventuellement en présence d'un accepteur d'acide, à une température comprise entre 0 et 80°C, un dérivé d'acide anthranilique éventuellement substitué, de formule

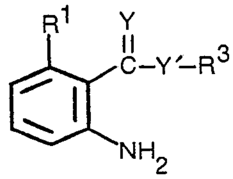

(II),

dans laquelle

$R^1$, Y et Y' ont les significations données dans la revendication 1 et $R^3$ a les significations données dans la revendication 1, exceptés hydrogène et atome de métal alcalin ou alcalino-terreux, avec des quantités environ stoechiométriques d'un halogénure d'acide carboxylique de formule

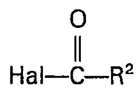

(III),

dans laquelle $R^2$ a les significations données dans la revendication 1 et Hal est mis pour halogène.

5. Procédé de préparation de dérivés d'acide N-acyl-anthranilique de formule I selon la revendication 1, caractérisé par le fait que l'on fait réagir, en présence d'un solvant organique inerte ou d'un excès de composé de formule V, éventuellement en présence d'une base inorganique ou d'une base organique tertiaire comme catalyseur, à une température comprise entre 0 et 190°C, un dérivé de 4H-3,1-benzoxazine éventuellement substitué, de formule

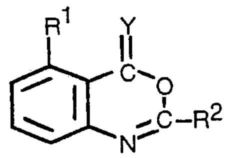

(IV),

dans laquelle

$R^1$, $R^2$ et Y ont les significations données dans la revendication 1, avec des quantités au moins stoechiométriques d'un dérivé hydroxy- ou thio- de formule

$$R^3—Y'—H \quad (V),$$

dans laquelle

$R^3$ et Y' ont les significations données dans la revendication 1.

6. Herbicide contenant un dérivé d'acide N-acyl-anthranilique de formule

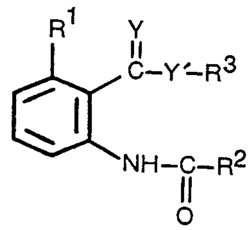

(Ia),

dans laquelle

$R^1$ représente halogène, nitro, alkyle en $C_1—C_4$, alcoxy en $C_1—C_4$, halogénoalkyle en $C_1—C_4$, halogénoalcoxy en $C_1—C_4$ ou halogénoalkylmercapto en $C_1—C_4$,

$R^2$, un reste thiényle éventuellement substitué par alkyle en $C_1—C_4$, ou un reste phényle substitué en méta ou para ou méta et para par halogénoalkyle en $C_1—C_4$, halogénoalcoxy en $C_1—C_4$, halogénoalkylmercapto en $C_1—C_4$, halogénoalkylsulfinyle en $C_1—C_4$, halogénoalkylsulfonyle en $C_1—C_4$ ou alkylsulfonyle en $C_1—C_4$,

$R^3$, un reste alkyle, alcényle ou alcinyle ayant jusqu'à 12 atomes de carbone, non ramifié ou ramifié, éventuellement substitué par halogène, cyano, thiocyano, nitro, alkylcarbonyle en $C_2—C_4$, alcoxy en $C_1—C_4$, alcényloxy en $C_2—C_4$, alcinyloxy en $C_2—C_4$, alkylmercapto en $C_1—C_4$, alcénylmercapto en $C_2—C_4$, alcinylmercapto en $C_2—C_4$, alcoxycarbonyle en $C_2—C_5$, alkylmercaptocarbonyle en $C_2—C_5$ ou alcénylcarbonyle en $C_3—C_4$, un reste cycloalkyle en $C_3—C_7$ éventuellement substitué par alkyle en $C_1—C_4$, alcoxy en $C_1—C_4$, alkylmercapto en $C_1—C_4$, alkylsulfonyle en $C_1—C_4$, halogène, trifluorméthyle, nitro ou cyano, un reste 2-(2-alcoxy-éthoxy)-éthyle, 2-(2-alcénoxy-éthoxy)-éthyle ou 2-(2-alcinoxy-éthoxyéthyle ayant jusqu'à 8 atomes de carbone, un reste 3-(2-alcoxy-éthoxy)-n-propyle ayant jusqu'à 9 atomes de carbone, un reste phényle éventuellement substitué par halogène, alkyle en $C_1—C_4$, halogénoalkyle en

$C_1$—$C_4$, alcoxy en $C_1$—$C_4$, halogénoalcoxy en $C_1$—$C_4$, alkylmercapto en $C_1$—$C_4$, halogénoalkylmercapto en $C_1$—$C_4$, nitro ou cyano, un reste phénoxyalkyle à 7 à 12 atomes de carbone, phénoxyalcényle à 8 à 12 atomes de carbone, phénoxyalcinyle à 8 à 12 atomes de carbone ou phénylalkyle à 7 à 12 atomes de carbone, éventuellement substitué par halogène, alkyle en $C_1$—$C_4$, halogénoalkyle en $C_1$—$C_4$, alcoxy en $C_1$—$C_4$, halogénoalcoxy en $C_1$—$C_4$, alkylmercapto en $C_1$—$C_4$, halogénoalkylmercapto en $C_1$—$C_4$, nitro ou cyano,

Y, oxygène ou soufre et

Y', oxygène ou soufre,

étant entendu que si $R^1$ représente fluor, $R^2$ peut aussi être mis pour un reste phényle éventuellement substitué par halogène, et $R^3$, aussi pour un atome de métal alcalin ou alcalino-terreux ou un reste ammonium éventuellement substitué par alkyle en $C_1$—$C_4$, hydroxyalkyle en $C_1$—$C_4$, halogénoalkyle en $C_1$—$C_4$ ou alcoxyalkyle en $C_2$—$C_5$.

7. Herbicide selon la revendication 6, caractérisé par le fait qu'il contient un dérivé d'acide N-acylanthranilique de formule Ia où $R^1$ est mis pour halogène, $R^2$, pour un reste thiényle, un reste phényle substitué par halogénoalkyle en $C_1$—$C_4$, halogénoalcoxy en $C_1$—$C_4$, halogénoalkylmercapto en $C_1$—$C_4$, ou pour un reste phényle éventuellement substitué par halogène dans le cas où $R^1$ représente fluor, $R^3$, pour un reste alkyle, alcényle ou alcinyle ayant jusqu'à 6 atomes de carbone, non ramifié ou ramifié, éventuellement substitué par halogène, cyano, alkylcarbonyle en $C_2$—$C_4$, alcoxy en $C_1$—$C_4$, alcényloxy en $C_2$—$C_4$, alcinyloxy en $C_2$—$C_4$ ou alkylmercapto en $C_1$—$C_4$, un reste cycloalkyle en $C_3$—$C_7$, un reste alkyle ayant jusqu'à 3 atomes de carbone, substitué par alcoxycarbonyle en $C_2$—$C_5$ ou alkylmercapto en $C_2$—$C_5$, un reste 2-(2-alcoxy-éthoxy)-éthyle, 2-(2-alcénoxy-éthoxy)-éthyle ou 2-(2-alcinoxy-éthoxy)-éthyle ayant jusqu'à 8 atomes de carbone, un reste phényle éventuellement substitué par alkyle, halogénoalkyle, alcoxy, halogénoalcoxy ayant chacun jusqu'à 2 atomes de carbone, par halogène, nitro ou cyano, ou pour un reste phénoxyalkyle à 7 à 10 atomes de carbone, phénoxyalcényle à 8 à 10 atomes de carbone, phénoxyalcinyle à 8 à 10 atomes de carbone ou phénylalkyle à 7 à 10 atomes de carbone, éventuellement substitué par alkyle, halogénoalkyle, alcoxy, halogénoalcoxy ayant chacun jusqu'à 2 atomes de carbone, par halogène, nitro ou cyano, ou dans le cas où $R^1$ représente fluor, également pour un atome de métal alcalin ou alcalino-terreux ou un reste ammonium éventuellement substitué par alkyle en $C_1$—$C_4$ ou hydroxyalkyle en $C_1$—$C_4$, Y et Y' étant mis pour oxygène.

8. Herbicide selon la revendication 6, caractérisé par le fait qu'il contient un dérivé d'acide N-acylanthranilique de formule Ia selon la revendication 1, où $R^2$ représente un reste phényle non ramifié ou ramifié, saturé ou insaturé,

$R^3$, un reste alkyle, alcényle ou alcinyle ayant jusqu'à 12 atomes de carbone, non ramifié ou ramifié, éventuellement substitué par halogène, cyano, thiocyano, nitro, alkylcarbonyle en $C_2$—$C_4$, alcoxy en $C_1$—$C_4$, alcényloxy en $C_2$—$C_4$, alcinyloxy en $C_2$—$C_4$, alkylmercapto en $C_1$—$C_4$, alcénylmercapto en $C_2$—$C_4$, alcinylmercapto en $C_2$—$C_4$, alcoxycarbonyle en $C_2$—$C_5$, alkylmercaptocarbonyle en $C_2$—$C_5$ ou alcénylcarbonyle en $C_3$—$C_4$, un reste cycloalkyle en $C_3$—$C_7$ éventuellement substitué par alkyle en $C_1$—$C_4$, alcoxy en $C_1$—$C_4$, alkylmercapto en $C_1$—$C_4$, alkylsulfonyle en $C_1$—$C_4$, halogène, trifluorométhyle, nitro ou cyano, un reste 2-(2-alcoxy-éthoxy)-éthyle, 2-(2-alcénoxy-éthoxy)-éthyle ou 2-(2-alcinoxy-éthoxy)-éthyle ayant jusqu'à 8 atomes de carbone, un reste 3-(2-alcoxy-éthoxy)-n-propyle ayant jusqu'à 9 atomes de carbone, un reste phényle éventuellement substitué par halogène, alkyle en $C_1$—$C_4$, halogénoalkyle en $C_1$—$C_4$, alcoxy en $C_1$—$C_4$, halogénoalcoxy en $C_1$—$C_4$, alkylmercapto en $C_1$—$C_4$, halogénoalkylmercapto en $C_1$—$C_4$, nitro ou cyano, un reste phénoxyalkyle à 7 à 12 atomes de carbone, phénoxyalcényle à 8 à 12 atomes de carbone, phénoxyalcinyle à 8 à 12 atomes de carbone ou phénylalkyle à 7 à 12 atomes de carbone, éventuellement substitué par halogène, alkyle en $C_1$—$C_4$, halogénoalkyle en $C_1$—$C_4$, alcoxy en $C_1$—$C_4$, halogénoalcoxy en $C_1$—$C_4$, alkylmercapto en $C_1$—$C_4$, halogénoalkylmercapto en $C_1$—$C_4$, nitro ou cyano,

Y, oxygène ou soufre et

Y' oxygène ou soufre,

étant entendu que si $R^1$ représente fluor, $R^2$ peut aussi être mis pour un reste phényle éventuellement substitué par halogène et $R^3$, aussi pour hydrogène, un atome de métal alcalin ou alcalino-terreux ou un reste ammonium éventuellement substitué par alkyle en $C_1$—$C_4$, hydroxyalkyle en $C_1$—$C_4$, halogénoalkyle en $C_1$—$C_4$ ou alcoxyalkyle en $C_2$—$C_5$.

9. Herbicide selon la revendication 6, caractérisé par le fait qu'il contient du N-benzoyl-6-fluor-anthranilate d'isopropyle comme dérivé d'acide N-acyl-anthranilique.

10. Herbicide contentant des additifs inertes et un dérivé d'acide N-acylanthranilique de formule

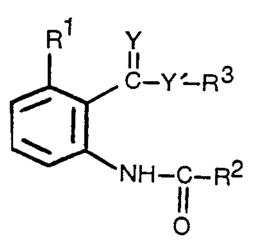

(Ib),

dans laquelle

$R^1$ représente halogène, nitro, alkyle en $C_1$—$C_4$, alcoxy en $C_1$—$C_4$, halogénoalkyle en $C_1$—$C_4$, halogénoalkoxy en $C_1$—$C_4$ ou halogénoalkylmercapto en $C_1$—$C_4$,

$R^2$, un reste thiényle éventuellement substitué par alkyle en $C_1$—$C_4$ ou un reste phényle substitué en méta ou para ou méta et para par halogénoalkyle en $C_1$—$C_4$, halogénoalcoxy en $C_1$—$C_4$, halogénoalkylmercapto en $C_1$—$C_4$, halogénoalkylsulfinyle en $C_1$—$C_4$, halogénoalkylsulfonyle en $C_1$—$C_4$ ou alkylsulfonyle en $C_1$—$C_4$, et

$R^3$, un reste alkyle, alcényle ou alcinyle ayant jusqu'à 4 atomes de carbone, éventuellement substitué par halogène ou alcoxy en $C_1$—$C_4$.

11. Procédé de lutte contre la croissance de plantes indésirables, caractérisé par le fait que l'on traite les plantes et/ou la surface à maintenir exempte de la croissance de plantes indésirables par un herbicide selon la revendication 10.

## Claims

1. An N-acylanthranilic acid derivative of the formula

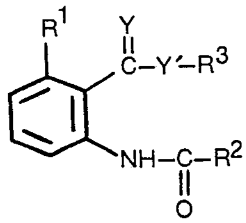

(I),

where $R^1$ is halogen, nitro, $C_1$—$C_4$-alkyl, $C_1$—$C_4$-alkoxy, $C_1$—$C_4$-haloalkyl, $C_1$—$C_4$-haloalkoxy or $C_1$—$C_4$-haloalkylmercapto, $R^2$ is phenyl which is m-substituted, p-substituted or m- and p-substituted by $C_1$—$C_4$-haloalkyl, $C_1$—$C_4$-haloalkoxy, $C_1$—$C_4$-haloalkylmercapto, $C_1$—$C_4$-haloalkylsulfinyl, $C_1$—$C_4$-haloalkylsulfonyl or $C_1$—$C_4$-alkylsulfonyl, $R^3$ is a straight-chain or branched alkyl, alkenyl or alkynyl radical of not more than 12 carbon atoms which is unsubstituted or substituted by halogen, cyano, thiocyano, nitro, $C_2$—$C_4$-alkylcarbonyl, $C_1$—$C_4$-alkoxy, $C_2$—$C_4$-alkenyloxy, $C_2$—$C_4$-alkynyloxy, $C_1$—$C_4$-alkylmercapto, $C_2$—$C_4$-alkenylmercapto, $C_2$—$C_4$-alkynylmercapto, $C_2$—$C_5$-alkoxycarbonyl, $C_2$—$C_5$-alkylmercaptocarbonyl or $C_3$—$C_4$-alkenylcarbonyl, or is $C_3$—$C_7$-cycloalkyl which is unsubstituted or substituted by $C_1$—$C_4$-alkyl, $C_1$—$C_4$-alkoxy, $C_1$—$C_4$-alkylmercapto, $C_1$—$C_4$-alkylsulfonyl, halogen, trifluoromethyl, nitro or cyano, a 2-(2-alkoxyethoxy)-ethyl, 2-(2-alkenoxyethoxy)-ethyl or 2-(2-alkynoxyethoxy)-ethyl radical of not more than 8 carbon atoms, a 3-(2-alkoxyethoxy)-n-propyl radical of not more than 9 carbon atoms, phenyl which is unsubstituted or substituted by halogen, $C_1$—$C_4$-alkyl, $C_1$—$C_4$-haloalkyl, $C_1$—$C_4$-alkoxy, $C_1$—$C_4$-haloalkoxy, $C_1$—$C_4$-alkylmercapto, $C_1$—$C_4$-haloalkylmercapto, nitro or cyano, or is phenoxyalkyl of 7 to 12 carbon atoms, phenoxyalkenyl of 8 to 12 carbon atoms, phenoxyalkynyl of 8 to 12 carbon atoms or phenylalkyl of 7 to 12 carbon atoms, each of which is unsubstituted or substituted by halogen, $C_1$—$C_4$-alkyl, $C_1$—$C_4$-haloalkyl, $C_1$—$C_4$-alkoxy, $C_1$—$C_4$-haloalkoxy, $C_1$—$C_4$-alkylmercapto, $C_1$—$C_4$-haloalkylmercapto, nitro or cyano, and Y and Y' are each oxygen or sulfur, with the proviso that if $R^1$ is fluorine $R^2$ may furthermore be unsubstituted or halogen-substituted phenyl and $R^3$ may also be ammonium which is unsubstituted or substituted by $C_1$—$C_4$-alkyl, $C_1$—$C_4$-hydroxyalkyl, $C_1$—$C_4$-haloalkyl or $C_2$—$C_5$-alkoxyalkyl.

2. An N-acylanthranilic acid derivative of the formula I as claimed in claim 1, wherein $R^3$ is straight-chain or branched, saturated or unsaturated, and unsubstituted or halogen- or $C_1$—$C_4$-alkoxy-substituted alkyl, alkenyl or alkynyl, each of a maximum of 4 carbon atoms.

3. Isopropyl N-benzoyl-6-fluoroanthranilate.

4. A process for the preparation of N-acylanthranilic acid derivatives of the formula I as claimed in claim 1, wherein a substituted or unsubstituted anthranilic acid derivative of the formula

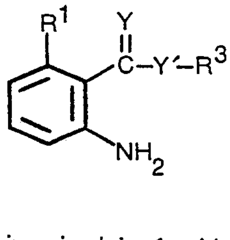

(II),

where $R^1$, Y, Y' and $R^3$ have the meanings given in claim 1, with the exception that $R^3$ is not hydrogen or an alkali metal or alkaline earth metal atom, is reacted with approximately stoichiometric amounts of a carboxylic acid halide of the formula

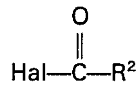 (III),

where $R^2$ has the meanings given in claim 1 and Hal is halogen, in the presence of an inert organic solvent or water and in the presence or absence of an acid acceptor, at from 0 to 80°C.

5. A process for the preparation of N-acylanthranilic acid derivatives of the formula I as claimed in claim 1, wherein a substituted or unsubstituted 4H-3,1-benzoxazine derivative of the formula

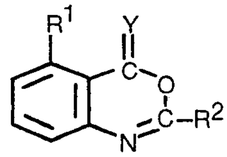 (IV),

where $R^1$, $R^2$ and Y have the meanings given in claim 1, is reacted with no less than stoichiometric amounts of a hydroxyl or thio compound of the formula

$$R^3—Y'—H \quad (V),$$

where $R^3$ and Y' have the meanings given in claim 1, in the presence of an inert organic solvent or an excess of the compound of the formula V, in the presence or absence of an inorganic or tertiary organic base as a catalyst, at from 0 to 190°C.

6. A herbicide containing an N-acylanthranilic acid derivative of the formula

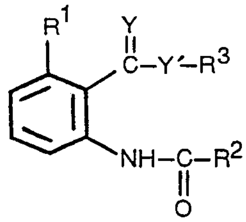 (Ia),

where $R^1$ is halogen, nitro, $C_1$—$C_4$-alkyl, $C_1$—$C_4$-alkoxy, $C_1$—$C_4$-haloalkyl, $C_1$—$C_4$-haloalkoxy or $C_1$—$C_4$-haloalkylmercapto, $R^2$ is unsubstituted or $C_1$—$C_4$-alkyl-substituted thienyl or is phenyl which is m-substituted, p-substituted or m- and p-substituted by $C_1$—$C_4$-haloalkyl, $C_1$—$C_4$-haloalkoxy, $C_1$—$C_4$-haloalkylmercapto, $C_1$—$C_4$-haloalkylsulfinyl, $C_1$—$C_4$-haloalkylsulfonyl or $C_1$—$C_4$-alkylsulfonyl, $R^3$ is a straight-chain or branched alkyl, alkenyl or alkynyl radical of not more than 12 carbon atoms which is unsubstituted or substituted by halogen, cyano, thiocyano, nitro, $C_2$—$C_4$-alkylcarbonyl, $C_1$—$C_4$-alkoxy, $C_2$—$C_4$-alkenyloxy, $C_2$—$C_4$-alkynyloxy, $C_1$—$C_4$-alkylmercapto, $C_2$—$C_4$-alkenylmercapto, $C_2$—$C_4$-alkynylmercapto, $C_2$—$C_5$-alkoxycarbonyl, $C_2$—$C_5$-alkylmercaptocarbonyl or $C_3$—$C_4$-alkenylcarbonyl, or is $C_3$—$C_7$-cycloalkyl which is unsubstituted or substituted by $C_1$—$C_4$-alkyl, $C_1$—$C_4$-alkoxy, $C_1$—$C_4$-alkylmercapto, $C_1$—$C_4$-alkylsulfonyl, halogen, trifluoromethyl, nitro or cyano, a 2-(2-alkoxyethoxy)-ethyl, 2-(2-alkenoxyethoxy)-ethyl or 2-(2-alkynoxyethoxy)-ethylradical or not more than 8 carbon atoms, a 3-(2-alkoxyethoxy)-n-propyl radical of not more than 9 carbon atoms, phenyl which is unsubstituted or substituted by halogen, $C_1$—$C_4$-alkyl, $C_1$—$C_4$-haloalkyl, $C_1$—$C_4$-alkoxy, $C_1$—$C_4$-haloalkoxy, $C_1$—$C_4$-alkylmercapto, $C_1$—$C_4$-haloalkylmercapto, nitro or cyano, or is phenoxyalkyl of 7 to 12 carbon atoms, phenoxyalkenyl of 8 ato 12 carbon atoms, phenoxyalkynyl of 8 to 12 carbon atoms or phenylalkyl of 7 to 12 carbon atoms, each of which is unsubstituted or substituted by halogen, $C_1$—$C_4$-alkyl, $C_1$—$C_4$-haloalkyl, $C_1$—$C_4$-alkoxy, $C_1$—$C_4$-haloalkoxy, $C_1$—$C_4$-alkylmercapto, $C_1$—$C_4$-haloalkylmercapto, nitro or cyano, and Y and Y' are each oxygen or sulfur, with the proviso that if $R^1$ is fluorine $R^2$ may furthermore be unsubstituted or halogen-substituted phenyl, and $R^3$ may also be an alkali metal or alkaline earth metal atom or ammonium which is unsubstituted or substituted by $C_1$—$C_4$-alkyl, $C_1$—$C_4$-hydroxyalkyl, $C_1$—$C_4$-haloalkyl or $C_2$—$C_5$-alkoxyalkyl.

7. A herbicidal agent as claimed in claim 6, which contains an N-acylanthranilic acid derivative of the formula Ia in which $R^1$ is halogen, $R^2$ is thienyl or a phenyl radical which is substituted by $C_1$—$C_4$-haloalkyl, $C_1$—$C_4$-haloalkoxy or $C_1$—$C_4$-haloalkylmercapto, or is unsubstituted or halogen-substituted phenyl if $R^1$ is fluorine, and $R^3$ is a straight-chain or branched alkyl, alkenyl or alkynyl radical of not more than 6 carbon atoms which is unsubstituted or substituted by halogen, cyano, $C_2$—$C_4$-alkylcarbonyl, $C_1$—$C_4$-alkoxy, $C_2$—$C_4$-alkenyloxy, $C_2$—$C_4$-alkynyloxy or $C_1$—$C_4$-alkylmercapto, or is $C_3$—$C_7$-cycloalkyl, alkyl of not more than 3 carbon atoms which is substituted by $C_2$—$C_5$-alkoxycarbonyl or $C_2$—$C_5$-alkylmercaptocarbonyl, a 2-(2-alkoxyethoxy)-ethyl, 2-(2-alkenoxyethyoxy)-ethyl or 2-(2-alkynoxyethoxy)-ethyl radical of not more than 8 carbon atoms, phenyl which is unsubstituted or substituted by alkyl, haloalkyl, alkoxy or haloalkoxy, each

of not more than 2 carbon atoms, halogen, nitro or cyano, or is phenoxyalkyl of 7 to 10 carbon atoms, phenoxyalkenyl of 8 to 10 carbon atoms, phenoxyalkynyl of 8 to 10 carbon aoms or phenylalkyl of 7 to 10 carbon atoms, each of which is unsubstituted or substituted by alkyl, haloalkyl, alkoxy or haloalkoxy, each of not more than 2 carbon atoms, halogen, nitro or cyano, or, if $R^1$ is fluorine, is also an alkali metal or alkaline earth metal atom or ammonium which is unsubstituted or substituted by $C_1$—$C_4$-alkyl or $C_1$—$C_4$-hydroxyalkyl, and Y and Y' are each oxygen.

8. A herbicidal agent as claimed in claim 6, which contains N-acylanthranilic acid derivative of the formula I as claimed in claim 1, in which $R^3$ is straight-chain or branched, saturated or unsaturated phenyl, and $R^3$ may also be a straight-chain or branched alkyl, alkenyl or alkynyl radical of not more than 12 carbon atoms which is unsubstituted or substituted by halogen, cyano, thiocyano, nitro, $C_2$—$C_4$-alkylcarbonyl, $C_1$—$C_4$-alkoxy, $C_2$—$C_4$-alkenyloxy, $C_2$—$C_4$-alkynyloxy, $C_1$—$C_4$-alkylmercapto, $C_2$—$C_4$-alkenylmercapto, $C_2$—$C_4$-alkynylmercapto, $C_2$—$C_5$-alkoxycarbonyl, $C_2$—$C_5$-alkylmercaptocarbonyl or $C_3$—$C_4$-alkenylcarbonyl, or is $C_3$—$C_7$-cycloalkyl which is unsubstituted or substituted by $C_1$—$C_4$-alkyl, $C_1$—$C_4$-alkoxy, $C_1$—$C_4$-alkylmercapto, $C_1$—$C_4$-alkylsulfonyl, halogen, trifluoromethyl, nitro or cyano, a 2-(2-alkoxyethoxy)-ethyl, 2-(2-alkenoxyethoxy)-ethyl or 2-(2-alkynoxyethoxy)-ethyl radical of not more than 8 carbon atoms, a 3-(2-alkoxyethoxy)-n-propyl radical of not more than 9 carbon atoms, phenyl which is unsubstituted or substituted by halogen, $C_1$—$C_4$-alkyl, $C_1$—$C_4$-haloalkyl, $C_1$—$C_4$-alkoxy, $C_1$—$C_4$-haloalkoxy, $C_1$—$C_4$-alkylmercapto, $C_1$—$C_4$-haloalkylmercapto, nitro or cyano, or is phenoxyalkyl of 7 to 12 carbon atoms, phenoxyalkenyl of 8 to 12 carbon atoms, phenoxyalkynyl of 8 to 12 carbon atoms or phenylalkyl of 7 to 12 carbon atoms, ech of which is unsubstituted or substituted by halogen, $C_1$—$C_4$-alkyl, $C_1$—$C_4$-haloalkyl, $C_1$—$C_4$-alkoxy, $C_1$—$C_4$-haloalkoxy, $C_1$—$C_4$-alkylmercapto, $C_1$—$C_4$-haloalkylmercapto, nitro or cyano, and Y and Y' are each oxygen or sulfur, with the proviso that if $R^1$ is fluorine $R^2$ may furthermore be unsubstituted or halogen-substituted phenyl and $R^3$ may also be ammonium which is unsubstituted or substituted by $C_1$—$C_4$-alkyl, $C_1$—$C_4$-hydroxyalkyl, $C_1$—$C_4$-haloalkyl or $C_2$—$C_5$-alkoxyalkyl.

9. A herbicide as claimed in claim 6, which contains isopropyl N-benzoyl-6-fluoranthranilate as the N-acylanthranilic acid derivative.

10. A herbicide containing inert additives and an N-acylanathranilic acid derivative of the formula

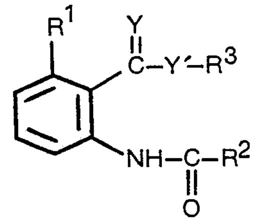

(Ib)

where $R^1$ is halogen, nitro, $C_1$—$C_4$-alkyl, $C_1$—$C_4$-alkoxy, $C_1$—$C_4$-haloalkyl, $C_1$—$C_4$-haloalkoxy or $C_1$—$C_4$-haloalkylmercapto, $R^2$ is unsubstituted or $C_1$—$C_4$-alkyl-substituted thienyl or is an alkyl, alkenyl or alkynyl radical of not more than 4 carbon atoms which is m-substituted, p-substituted or m- and p-substituted by $C_1$—$C_4$-haloalkyl, $C_1$—$C_4$-haloalkoxy, $C_1$—$C_4$-haloalkylmercapto, $C_1$—$C_4$-haloalkylsulfinyl, $C_1$—$C_4$-haloalkylsulfonyl or $C_1$—$C_4$-alkylsulfonyl or may be substituted by halogen or $C_1$—$C_4$-alkoxy.

11. A process for controlling undesirable plant growth, wherein the plants and/or area to be kept free from undesirable plant growth are treated with a herbicide as claimed in claim 10.